# EUROPEAN PATENT APPLICATION

(11) **EP 4 027 071 A1**
(43) Date of publication of application: **13.07.2022**
(21) Application number: 20860425.6
(22) Date of filing: 27.08.2020
(51) Int. Cl.: F24F 11/48, F24F 11/52, F24F 11/61, F24F 11/83, F24F 110/20, F24F 13/22, F24F 1/0087, F24F 6/00

(54) **AIR CONDITIONING SYSTEM**

(30) Priority: 02.09.2019 JP 2019159446; 27.09.2019 JP 2019177785
(71) Applicant: Daikin Industries, Ltd., Osaka-shi, Osaka 530-8323 (JP)
(72) Inventor: UGAI, Kouji, Osaka 530-8323 (JP); NISHIDA, Teruo, Osaka 530-8323 (JP); ITOU, Hiroshi, Osaka 530-8323 (JP)
(74) Representative: Hoffmann Eitle
(86) International application number: PCT/JP2020/032461
(87) International publication number: WO 2021/044947

(57) **Abstract**

Provided is an air conditioning system capable of sufficiently cleaning an indoor heat exchanger by using moisture in indoor air even when a room is dry before operation. An air conditioning system (1) includes an air conditioner (10) having an indoor unit (2) and an outdoor unit (4), a humidifier (6), and a controller (8). The indoor unit (2) has an indoor heat exchanger (21) and exchanges heat of the indoor air by passing the indoor air through the indoor heat exchanger (21). The humidifier (6) supplies moisture to the room to increase a humidity in the room. The controller (8) controls the indoor unit (2) and the humidifier (6). In the cleaning mode, the controller (8) controls the humidifier (6) to raise the humidity in the room, and then controls the indoor unit (2) to perform a cleaning motion of cleaning a surface of the indoor heat exchanger (21) by generating dew condensation water on the surface of the indoor heat exchanger (21).

## Description

### TECHNICAL FIELD

The present disclosure relates to an air conditioning system that has a cleaning mode for cleaning an indoor heat exchanger.

### BACKGROUND ART

Conventionally, there is a technique for cleaning an indoor heat exchanger by adhering moisture to a fin surface of an indoor heat exchanger in an indoor unit for performing air conditioning. For example, Patent Literature 1 (JP 2008-138913 A) discloses a technique in which a cooling operation is performed as a moisture application device that adheres moisture to the fin surface after a heating operation, the moisture is applied to the fin surface, and a heat exchanger is automatically kept clean during the heating operation.

### SUMMARY OF THE INVENTION

### <Technical Problem>

However, in the air conditioner disclosed in Patent Literature 1, it is premised that air in the room contains sufficient moisture when the cooling operation is performed as the moisture application device. For example, when the room is dry due to weather conditions or dehumidification of the room, sufficient moisture cannot be adhered to the fin surface. When the room is dry in this way, the air conditioner disclosed in Patent Literature 1 or an air conditioning system including such an air conditioner cannot satisfactorily clean the indoor heat exchanger.

It is an object to provide an air conditioning system capable of sufficiently cleaning an indoor heat exchanger by using moisture in indoor air even when a room is dry before operation.

### <Solution to Problem>

An air conditioning system according to a first aspect includes an air conditioner, a humidifier, and a controller. The air conditioner includes an indoor unit and an outdoor unit. The indoor unit has an indoor heat exchanger and exchanges heat of indoor air by passing the indoor air through the indoor heat exchanger. The humidifier supplies moisture to a room to increase a humidity in the room. The controller controls the indoor unit and the humidifier. In a cleaning mode, the controller controls the humidifier to raise the humidity in the room, and then controls the indoor unit to perform a cleaning motion of cleaning a surface of the indoor heat exchanger by generating dew condensation water on the surface of the indoor heat exchanger.

The air conditioning system according to the first aspect can raise the humidity in the room by humidification in the cleaning mode and perform the cleaning motion with sufficient dew condensation water even when weather conditions or the like make the room dry and cause an unsuitable situation for cleaning the indoor heat exchanger.

An air conditioning system according to a second aspect is the air conditioning system according to the first aspect, in which in the cleaning mode, the controller controls the humidifier for the humidity in the room to reach a predetermined humidity, and then controls the indoor unit to perform the cleaning motion of cleaning the surface of the indoor heat exchanger by generating dew condensation water on the surface of the indoor heat exchanger.

The air conditioning system according to the second aspect can raise the humidity in the room to a predetermined humidity by humidification in the cleaning mode and perform the cleaning motion with sufficient dew condensation water even when weather conditions or the like make the room dry and cause an unsuitable situation for cleaning the indoor heat exchanger.

An air conditioning system according to a third aspect is the air conditioning system according to the second aspect, in which the controller causes the indoor heat exchanger to function as an evaporator and causes the humidifier to perform humidification in the cleaning motion.

In the air conditioning system according to the third aspect, for example, even when a room temperature is decreased during the humidification before the cleaning motion and a dew point temperature is decreased, the humidification continues during the cleaning motion, and thus sufficient dew condensation water necessary for cleaning can be secured.

An air conditioning system according to a fourth aspect is the air conditioning system according to the second aspect, in which when the humidity in the room is equal to or higher than the predetermined humidity at a start of the cleaning mode, the controller causes the air conditioner to start the cleaning motion without causing the humidifier to perform humidification in the cleaning mode.

The air conditioning system according to the fourth aspect can shorten an operation time of the cleaning mode and reduce an energy consumption by omitting the humidification in the cleaning mode.

An air conditioning system according to a fifth aspect is the air conditioning system according to any of the first to fourth aspects, in which the humidifier is provided in the air conditioner.

In the air conditioning system according to the fifth aspect, since the humidifier is provided in the air conditioner, a space for installing devices of the air conditioning system can be reduced.

An air conditioning system according to a sixth aspect is the air conditioning system according to the first to fourth aspects, in which the air conditioner and the humidifier are separate bodies.

In the air conditioning system according to the sixth aspect, by separating the air conditioner and the humidifier, a humidifying capacity of the cleaning mode can be changed easily and the humidifier can be maintained easily.

An air conditioning system according to a seventh aspect is the air conditioning system according to any of the first to sixth aspects, in which in the cleaning mode, the controller sets a humidifying capacity of the humidifier to be equal to or higher than a maximum value of a humidifying capacity that appears in an operating mode other than the cleaning mode.

In the air conditioning system according to the seventh aspect, the humidifying capacity in the cleaning mode is set to be equal to or higher than the maximum value of the humidifying capacity appearing in an operating mode other than the cleaning mode, and thus time until an end of the cleaning mode can be reduced.

An air conditioning system according to an eighth aspect is the air conditioning system according to any of the first to seventh aspects, in which the indoor heat exchanger includes a first heat exchange section located upstream of a refrigerant flowing through the indoor heat exchanger and a second heat exchange section located downstream of the refrigerant flowing through the indoor heat exchanger when dew condensation water is generated on the indoor heat exchanger in the cleaning motion, and the controller performs control of setting substantially all of the first heat exchange section and the second heat exchange section as an evaporation region at a start of the cleaning motion, and changing the second heat exchange section to a superheat region or a condensation region in a midway of the cleaning mode.

The air conditioning system according to the eighth aspect can suppress a decrease in the temperature of the air blown out from the indoor unit by the second heat exchange section changed to the superheat region or the condensation region, while generating dew condensation water on the first heat exchange section in a midway of the cleaning mode. As a result, the air conditioning system can easily suppress an excessive decrease in the indoor air temperature in the cleaning mode.

An air conditioning system according to a ninth aspect is the air conditioning system according to any of the second to fourth aspects, in which when the humidity does not reach the predetermined humidity even after a predetermined time has elapsed from a start of humidification of the humidifier in the cleaning mode, the controller ends the humidification and notifies that the cleaning motion cannot be performed.

When the air conditioning system according to the ninth aspect ends the humidification after a lapse of the predetermined time, it is highly possible that the room has not been sufficiently humidified to be suitable for the cleaning motion. In such a case, the air conditioning system can notify a user that the cleaning motion cannot be performed and prompt the user to improve the situation to be suitable for the cleaning mode.

An air conditioning system according to a tenth aspect is the air conditioning system according to any of the second to fourth aspects, in which when the humidity does not reach the predetermined humidity even after a predetermined time has elapsed from a start of humidification of the humidifier in the cleaning mode, the controller ends the humidification and starts the cleaning motion.

In the air conditioning system according to the tenth aspect, although the humidity in the room rises to some extent after the lapse of the predetermined time, the humidity may not reach the predetermined humidity in some cases. Continuing humidification in such a case increases an energy loss and extends the time until the end of the cleaning mode. By starting the cleaning motion after a lapse of a predetermined time, the air conditioning system can suppress wasteful energy consumption and extension of wasteful time for the cleaning mode.

### BRIEF DESCRIPTION OF THE DRAWINGS

FIG. 1 is a conceptual diagram showing an example of a configuration of an air conditioning system according to a first embodiment.
FIG. 2 is a sectional view showing an example of a configuration of an indoor unit of the air conditioning system.
FIG. 3 is a diagram for describing a refrigerant circuit and an air flow path included in the air conditioning system in FIG. 1.
FIG. 4 is an exploded perspective view showing a configuration example of an outdoor unit and a humidifier in Fig. 1.
FIG. 5 is a block diagram for describing the configuration of the air conditioning system in Fig. 1.
FIG. 6 is a diagram for describing a motion of each device in a first dehumidifying operation, a second dehumidifying operation, and a third dehumidifying operation.
FIG. 7 is a flowchart for describing motions of the air conditioning system.
FIG. 8 is a timing chart for comparing a humidifying operation in a normal mode and an operation in a cleaning mode.
FIG. 9 is a flowchart showing a motion example of a controller at an automatic shift to the cleaning mode.
FIG. 10 is a conceptual diagram showing an example of a configuration of an air conditioning system according to a second embodiment.
FIG. 11 is an exploded perspective view showing a configuration example of an air purifier in FIG. 10.
FIG. 12 is a perspective view showing appearance of the air purifier in FIG. 11.
FIG. 13 is a block diagram for describing the configuration of the air conditioning system in FIG. 10.
FIG. 14 is a timing chart for comparing the humidifying operation in the normal mode and an operation in the cleaning mode according to a modification.
FIG. 15 is a flowchart for describing another example of the motions of the air conditioning system.

### DESCRIPTION OF EMBODIMENTS

### <First embodiment>

### (1) General configuration of air conditioning system 1

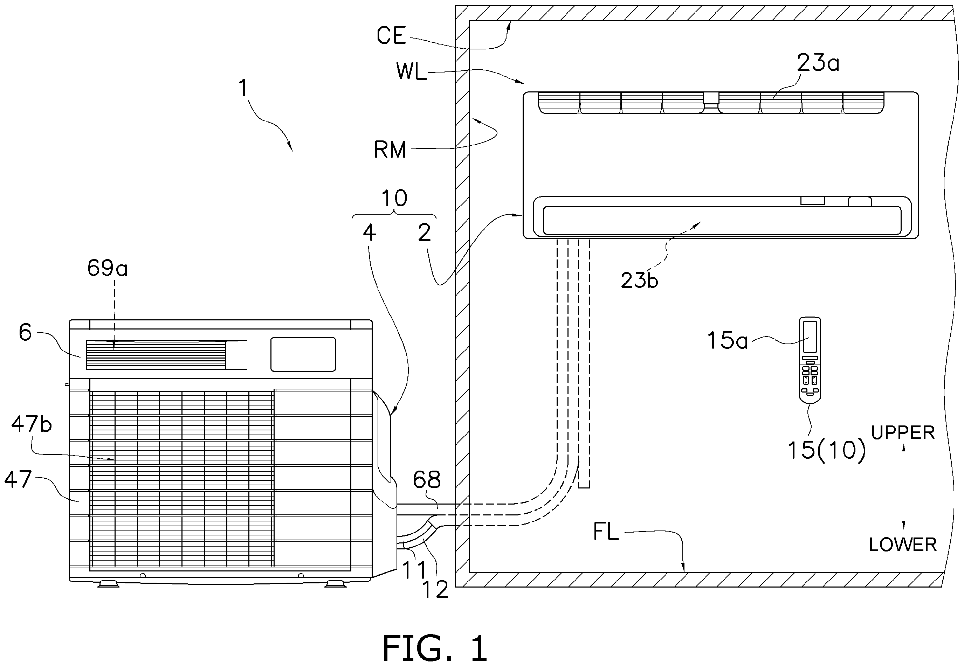

As shown in FIG. 1, an air conditioning system 1 according to a first embodiment includes an air conditioner 10 and a humidifier 6. The air conditioner 10 includes an indoor unit 2 and an outdoor unit 4. The indoor unit 2 is installed in a room RM (see FIG. 1) and performs air conditioning in the room RM (indoor). In the first embodiment, a case will be described where the indoor unit 2 is installed by being attached to a wall WL of the room RM However, a type of the indoor unit 2 is not limited to a type installed on the wall WL of the room RM The indoor unit 2 may be installed on a ceiling CE or a floor FL, for example.

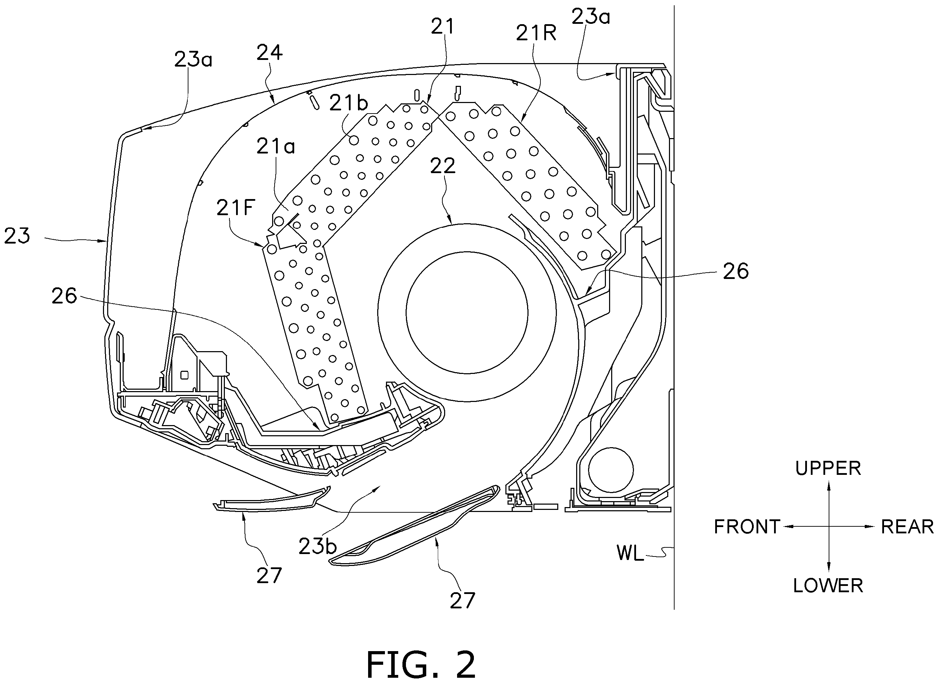

The indoor unit 2 includes an indoor heat exchanger 21 as shown in FIG. 2. The indoor unit 2 exchanges heat of indoor air (air in the room RM) by passing the indoor air through the indoor heat exchanger 21. The indoor heat exchanger 21 has a plurality of heat transfer fins 21a and a plurality of heat transfer tubes 21b. The indoor air passes between the plurality of heat transfer fins 21a. During heat exchange, air passes between the plurality of heat transfer fins 21a, and at the same time, a refrigerant flows through the heat transfer tubes 21b. Each of the heat transfer tubes 21b is folded a plurality of times and penetrates one heat transfer fin 21a a plurality of times.

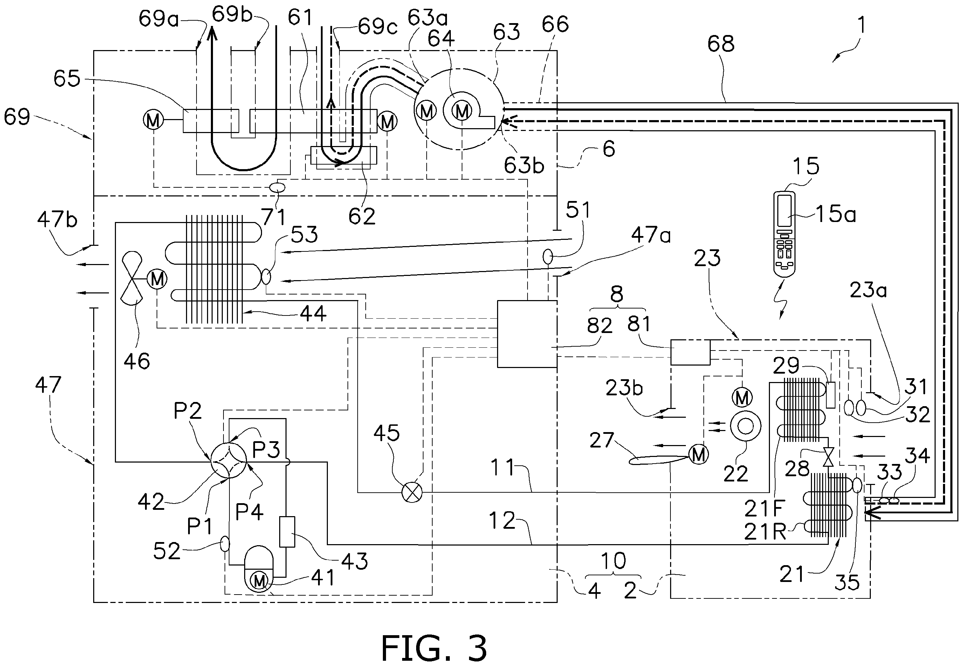

The humidifier 6 shown in FIGS. 1 and 3 supplies moisture to inside of the room RM (indoor) to humidify the room to raise a humidity in the room.

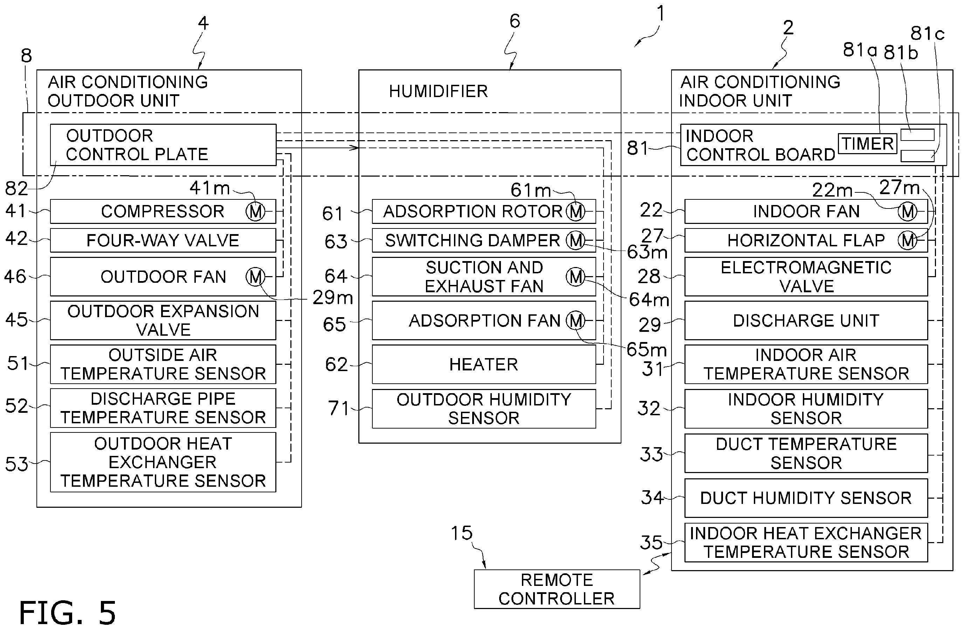

As shown in FIGS. 3 and 5, the air conditioning system 1 includes a controller 8 that controls the indoor unit 2 and the humidifier 6. The controller 8 controls the indoor unit 2 to clean the indoor heat exchanger 21 in the cleaning mode. In the cleaning mode, the controller 8 controls the humidifier 6 to raise the humidity in the room, and then controls the indoor unit 2 to perform a cleaning motion of cleaning a surface of the indoor heat exchanger 21 by generating dew condensation water on the surface of the indoor heat exchanger 21.

In the cleaning mode, the controller 8 preferably first controls the humidifier 6 such that the humidity in the room reaches a predetermined humidity. In this case, after the humidity in the room is adjusted to a predetermined humidity by the humidifier 6, the controller 8 performs the cleaning motion of cleaning the surface of the indoor heat exchanger 21 by generating dew condensation water on the surface of the indoor heat exchanger 21. Here, the surface of the indoor heat exchanger 21 includes the heat transfer fins 21a.

The controller 8 is implemented by, for example, a microcomputer. The controller 8 includes, for example, a control calculator 81b and a storage 81c. The control calculator 81b may be a processor such as a CPU or a GPU. The control calculator 81b reads a program stored in the storage 81c, and performs, for example, predetermined sequence processing and calculation processing in accordance with this program. The control calculator 81b is configured to further write a result of the calculation processing to the storage 81c and read information stored in the storage 81c in accordance with the program. The storage 81c can be used as database.

For example, in the cleaning mode, the controller 8 first causes the humidifier 6 to perform humidification in response to a command from the control calculator 81b in accordance with a processing sequence stored in the storage 81c, and then causes the indoor unit 2 to perform the cleaning motion.

When the room is dry due to weather conditions or the like, it is difficult to clean the surface of the indoor heat exchanger 21 by causing dew condensation on the surface of the indoor heat exchanger 21 in the room left dry. However, even when the room is dry due to weather conditions or the like, the air conditioning system 1 can raise the humidity in the room to a predetermined humidity by humidifying the room in the cleaning mode. The air conditioning system 1 can perform the cleaning motion in a state where the humidity in the room has risen to a predetermined humidity. As described above, the air conditioning system 1 can clean the surface of the indoor heat exchanger 21 by causing sufficient dew condensation without being affected by the drying of the room due to the weather conditions or the like.

### (2) Detailed configuration

### (2-1) Overall configuration

The indoor unit 2 is included in the air conditioner 10 of the air conditioning system 1. In addition to the indoor unit 2, the air conditioner 10 includes the outdoor unit 4 and a remotecontroller 15 shown in FIGS. 1 and 2. The indoor unit 2 and the outdoor unit 4 are connected to each other by refrigerant connection pipes 11 and 12. The indoor unit 2, the outdoor unit 4, and the refrigerant connection pipes 11 and 12 constitute a refrigerant circuit 13. The indoor unit 2 and the outdoor unit 4 are controlled by the controller 8. In the refrigerant circuit 13, for example, a vapor compression refrigeration cycle is repeated during a cooling operation, a heating operation, and a dehumidifying operation.

### (2-2) Detailed configuration

### (2-2-1) Indoor unit 2

As shown in FIGS. 2, 3 and 5, the indoor unit 2 includes the indoor heat exchanger 21, an indoor fan 22, a casing 23, an air filter 24, a drain pan 26, and a horizontal flap 27, a vertical flap (not shown) and a discharge unit 29. The indoor unit 2 further includes an indoor air temperature sensor 31, an indoor humidity sensor 32, a duct temperature sensor 33, a duct humidity sensor 34, and an indoor heat exchanger temperature sensor 35.

In the following description, the directions may be described using the expressions "upper", "lower", "front", and "rear" in accordance with the directions indicated by arrows in FIGS. 1 and 2.

The casing 23 has a suction port 23a at an upper part and a blow-out port 23b at a lower part. The indoor unit 2 drives the indoor fan 22 to suck in the indoor air from the suction port 23a, and blow out air that has passed through the indoor heat exchanger 21 from the blow-out port 23b.

The indoor fan 22 is disposed at a substantially center of the casing 23 in a sectional view of the indoor unit 2 (see FIG. 2). The indoor fan 22 is, for example, a cross-flow fan. The indoor heat exchanger 21 is disposed upstream of the indoor fan 22 in an air flow path from the suction port 23a to the blow-out port 23b. The indoor heat exchanger 21 has a shape that opens downward so as to cover an upper part of the indoor fan 22 when viewed in an extending direction of the heat transfer tubes 21b. Here, such a shape is referred to as a substantially A shape. The indoor heat exchanger 21 includes a first heat exchange section 21F far from the wall WL and a second heat exchange section 21R close to the wall WL.

The drain pan 26 is disposed under a lower front part and a lower rear part of the indoor heat exchanger 21 having a substantially A shape. Condensation generated in the first heat exchange section 21F of the indoor heat exchanger 21 is received by the drain pan 26 disposed in the lower front part of the indoor heat exchanger 21. Condensation generated in the second heat exchange section 21R of the indoor heat exchanger 21 is received by the drain pan 26 disposed in the lower rear part of the indoor heat exchanger 21.

The horizontal flap 27 and the vertical flap are disposed at the blow-out port 23b. The horizontal flap 27 changes a wind direction of air blown from the blow-out port 23b up and down. Thus, the horizontal flap 27 is configured to change an angle formed with a horizontal direction by a motor 27m. The vertical flap is configured to change a wind direction of the air blown from the blow-out port 23b to left and right. The air conditioning system 1 drives, for example, the vertical flap to change an angle with front and rear directions by a motor (not shown).

An air filter 24 is disposed downstream of the suction port 23a and upstream of the indoor heat exchanger 21 in the casing 23. The air filter 24 is installed in the casing 23 such that substantially all of the indoor air supplied to the indoor heat exchanger 21 passes through the air filter 24. Thus, dust larger than a mesh of the air filter 24 is removed by the air filter 24 and does not reach the indoor heat exchanger 21. However, dust, oil mist, and the like finer than the mesh of the air filter 24 that pass through the air filter 24 reach the indoor heat exchanger 21.

The discharge unit 29 is an active species generator that has a discharger inside. The discharger includes, for example, a needle-shaped electrode and a counter electrode, and generates a streamer discharge, which is a type of plasma discharge by applying a high voltage. Active species with high oxidative decomposition power are produced when a discharge occurs. Example of these active species include fast electrons, ions, hydroxide radicals, and excited oxygen molecules. The active species decomposes harmful components and odorous components in the air including small organic molecules such as ammonia, aldehydes, and nitrogen oxides. The discharge unit 29 is disposed, for example, upstream of the air filter 24 or upstream of the indoor heat exchanger 21.

An indoor control board 81 constituting the controller 8 is disposed in the indoor unit 2. As shown in FIG. 5, the indoor control board 81 is connected to a motor 22m of the indoor fan 22, the motor 27m of the horizontal flap 27, and an electromagnetic valve 28. The controller 8 can control a number of revolutions of the motor 22m of the indoor fan 22, a rotational angle of the motor 27m of the horizontal flap 27, and turning on and off of the electromagnetic valve 28 by the indoor control board 81. The indoor control board 81 has a timer 81a, the control calculator 81b, and the storage 81c. The indoor control board 81 is connected to an outdoor control board 82 (see FIGS. 3 and 5) disposed in the outdoor unit 4. Here, a case will be described where the indoor control board 81 has the timer 81a, the control calculator 81b, and the storage 81c. However, the timer 81a, the control calculator 81b, and the storage 81c may be provided at a location other than the controller 8. For example, the timer 81a, the control calculator 81b, and the storage 81c may be provided on the outdoor control board 82.

The controller 8 receives a signal from the remotecontroller 15 by the indoor control board 81, and receives an instruction input from the remotecontroller 15. The remotecontroller 15 has a display screen 15a. The controller 8 can display various information on the display screen 15a of the remotecontroller 15. The controller 8 can use, for example, the display screen 15a to notify that the cleaning motion cannot be performed.

FIGS. 3 and 5 show the indoor air temperature sensor 31, the indoor humidity sensor 32, the duct temperature sensor 33, the duct humidity sensor 34, and the indoor heat exchanger temperature sensor 35 among the sensors included in the indoor unit 2. These sensors included in the indoor unit 2 are connected to the indoor control board 81. Thus, the controller 8 can detect temperature of the indoor air by the indoor air temperature sensor 31, and can detect relative humidity of the indoor air by the indoor humidity sensor 32. The controller 8 can detect temperature of the air blown from the humidifier 6 to the indoor unit 2 by the duct temperature sensor 33 and detect relative humidity of the air blown from the humidifier 6 to the indoor unit 2 by the duct humidity sensor 34. Further, the controller 8 can detect temperature of the refrigerant flowing in a specific location of the indoor heat exchanger 21 by the indoor heat exchanger temperature sensor 35. This particular location is, for example, a location of the heat transfer tubes 21b to which the indoor heat exchanger temperature sensor 35 is attached.

As shown in FIG. 3, the indoor heat exchanger 21 has the electromagnetic valve 28. The refrigerant flowing from an outdoor expansion valve 45 to the other gate of the indoor heat exchanger 21 flows from the first heat exchange section 21F to the second heat exchange section 21R through the electromagnetic valve 28. On the contrary, the refrigerant flowing from a fourth port P4 of a four-way valve 42 to one gate of the indoor heat exchanger 21 flows from the second heat exchange section 21R to the first heat exchange section 21F through the electromagnetic valve 28. The electromagnetic valve 28 is a valve that sets a differential pressure between the first heat exchange section 21F and the second heat exchange section 21R. Here, a case where the electromagnetic valve 28 is used will be described, but another control valve such as an electric valve capable of changing a valve opening degree may be used. The electromagnetic valve 28 is set to have an opening degree that is smaller in an on state than in an off state. In other words, the electromagnetic valve 28 increases the differential pressure between the first heat exchange section 21F and the second heat exchange section 21R in the on state.

### (2-2-2) Outdoor unit 4

The outdoor unit 4 includes a compressor 41, the four-way valve 42, an accumulator 43, an outdoor heat exchanger 44, the outdoor expansion valve 45, an outdoor fan 46, and a casing 47, as shown in FIGS. 3 and 5. The compressor 41, the four-way valve 42, the accumulator 43, the outdoor heat exchanger 44, the outdoor expansion valve 45, and the outdoor fan 46 are housed in the casing 47. The casing 47 has a suction port 47a (see FIG. 3) for sucking in outdoor air and a blow-out port 47b (see FIGS. 1 and 3) for blowing out the air after heat exchange. The suction port 47a is disposed on a rear side of the casing 47. The outdoor unit 4 functions as a heat source unit that supplies heat energy to the indoor unit 2.

The compressor 41 sucks in, compresses, and discharges a gas refrigerant. The compressor 41 is, for example, a variable displacement compressor whose operating capacity can be changed by adjusting an operating frequency of a motor 41m with an inverter. The higher the operating frequency, the larger the operating capacity of the compressor 41. The four-way valve 42 has four ports. A first port P1 of the four-way valve 42 is connected to a discharge port of the compressor 41. A second port P2 of the four-way valve 42 is connected to one gate of the outdoor heat exchanger 44. A third port P3 of the four-way valve 42 is connected to the accumulator 43. A fourth port P4 of the four-way valve 42 is connected to one gate of the indoor heat exchanger 21.

The accumulator 43 is connected between the third port P3 of the four-way valve 42 and the suction port of the compressor 41. The outdoor heat exchanger 44 connects the other gate to one gate of the outdoor expansion valve 45. The outdoor heat exchanger 44 exchanges heat between the refrigerant flowing inside from one gate or the other gate and the outdoor air. The outdoor expansion valve 45 connects the other gate to the other gate of the indoor heat exchanger 21.

The outdoor control board 82 constituting the controller 8 is disposed in the outdoor unit 4. The outdoor control board 82 is connected to the indoor control board 81. The outdoor control board 82 is connected to the motor 41m of the compressor 41, the four-way valve 42, and a motor 46m of the outdoor fan 46. The controller 8 can control the operating frequency of the motor 41m of the compressor 41, the opening degree of the four-way valve 42, and a number of revolutions of the motor 46m of the outdoor fan 46 by the outdoor control board 82.

FIGS. 3 and 5 show an outside air temperature sensor 51, a discharge pipe temperature sensor 52, and an outdoor heat exchanger temperature sensor 53 among the sensors included in the outdoor unit 4. These sensors included in the outdoor unit 4 are connected to the outdoor control board 82. Thus, the controller 8 can detect temperature of the outdoor air by the outside air temperature sensor 51. Further, the controller 8 can detect temperature of the refrigerant flowing through a discharge pipe (a refrigerant pipe connected to the discharge port of the compressor 41) by the discharge pipe temperature sensor 52, and can detect temperature of the refrigerant flowing through a specific location in the outdoor heat exchanger 44 by the outdoor heat exchanger temperature sensor 53. When controlling a refrigeration cycle, the controller 8 monitors a state of the refrigerant in the refrigerant circuit 13 by the discharge pipe temperature sensor 52, the outdoor heat exchanger temperature sensor 53, the indoor heat exchanger temperature sensor 35, and the like.

The refrigerant circuit 13 includes the compressor 41, the four-way valve 42, the accumulator 43, the outdoor heat exchanger 44, the outdoor expansion valve 45, and the indoor heat exchanger 21. The refrigerant circulates in the refrigerant circuit 13. Examples of the refrigerant include fluorocarbons such as R32 refrigerant and R410 refrigerant, carbon dioxide, and the like.

In the vapor compression refrigeration cycle, the refrigerant is compressed by the compressor 41 to raise the temperature, and then the refrigerant is dissipated by the outdoor heat exchanger 44 or the indoor heat exchanger 21. Further, in the vapor compression refrigeration cycle, the refrigerant is decompressed and expanded by the outdoor expansion valve 45, and then the refrigerant absorbs heat in the indoor heat exchanger 21 or the outdoor heat exchanger 44. In the accumulator 43, gas-liquid separation of the refrigerant sucked into the compressor 41 is performed. The four-way valve 42 switches a direction of a flow of the refrigerant in the refrigerant circuit 13.

### (2-2-3) Humidifier 6

The humidifier 6 according to the first embodiment is integrated with the outdoor unit 4. The humidifier 6 takes in moisture from the outdoor air. The humidifier 6 generates high-humidity air by applying the taken moisture to the outdoor air. The humidifier 6 sends this high-humidity air to the indoor unit 2. During humidification, the air conditioning system 1 mixes the high-humidity air sent from the humidifier 6 with the indoor air in the indoor unit 2. The indoor unit 2 humidifies the room by blowing out the air mixed with the high-humidity air into the room RM (indoor). The humidifier 6 is controlled by the controller 8.

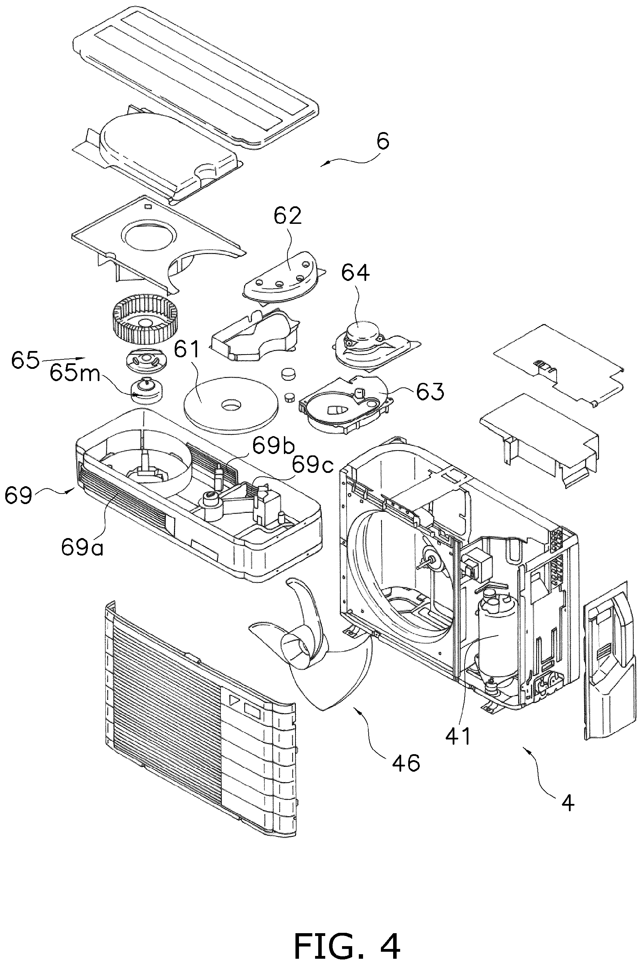

As shown in FIG. 4, the humidifier 6 includes an adsorption rotor 61, a heater 62, a switching damper 63, a suction and exhaust fan 64, an adsorption fan 65, a duct 66, and a casing 69. Further, the humidifier 6 includes a suction and exhaust hose 68. As shown in FIGS. 1 and 4, the casing 69 of the humidifier 6 is attached to and integrated with the casing 47 of the outdoor unit 4. The humidifier 6 has an adsorption air blow-out port 69a, an adsorption air intake port 69b, and a humidifying air intake port 69c in the casing 69.

The adsorption rotor 61 is, for example, a disk-shaped ceramic rotor having a honeycomb structure. The ceramic rotor can be formed, for example, by firing an adsorbent. The adsorbent has a property of adsorbing the moisture in the air that is in contact with the adsorbent. Further, the adsorbent has a property of desorbing the adsorbed moisture by being heated. Examples of the adsorbent include zeolite, silica gel, or alumina. The adsorption rotor 61 is driven by a motor 61m and rotates. A number of revolutions of the adsorption rotor 61 can be changed by changing a number of revolutions of the motor 61m.

The heater 62 is disposed between the humidifying air intake port 69c and the switching damper 63. The outdoor air taken in from the humidifying air intake port 69c passes through the heater 62, then further passes through the adsorption rotor 61, and reaches the switching damper 63. When the air heated by the heater 62 passes through the adsorption rotor 61, the moisture is desorbed from the adsorption rotor 61, and the moisture is supplied to the heated air by the adsorption rotor 61. Output of the heater 62 can be changed, and the temperature of the air passing through the heater 62 can be changed in accordance with the output. Within a specific temperature range, the adsorption rotor 61 tends to desorb a large amount of moisture as the temperature of the air passing through the adsorption rotor 61 increases.

The switching damper 63 has a first gate 63a and a second gate 63b. The switching damper 63 can switch whether the first gate 63a or the second gate 63b is used as an inlet of the air sucked, when the suction and exhaust fan 64 drives. When the inlet of the air is the first gate 63a, the outdoor air flows sequentially in a direction of an arrow shown by a solid line in FIG. 3, from the humidifying air intake port 69c to the adsorption rotor 61, the heater 62, the adsorption rotor 61, the first gate 63a, the suction and exhaust fan 64, the second gate 63b, the duct 66, the suction and exhaust hose 68, and the indoor unit 2. When the inlet of the air is switched to the second gate 63b, the air flows conversely in a direction of an arrow shown by a broken line in FIG. 3, from the indoor unit 2 to the suction and exhaust hose 68, the duct 66, the second gate 63b, the suction and exhaust fan 64, the first gate 63a, the adsorption rotor 61, the heater 62, the adsorption rotor 61, and the humidifying air intake port 69c. The switching damper 63 is switched by a motor 63m.

The suction and exhaust fan 64 is disposed between the first gate 63a and the second gate 63b of the switching damper 63. The suction and exhaust fan 64 generates an airflow from the first gate 63a to the second gate 63b or from the second gate 63b to the first gate 63a. The suction and exhaust fan 64 is driven by a motor 64m.

One end of the suction and exhaust hose 68 is connected to the duct 66, and the other end is connected to the indoor unit 2. With such a configuration, the suction and exhaust hose 68 and the room RM communicate with each other via the indoor unit 2.

The adsorption fan 65 is disposed in a passage leading from the adsorption air intake port 69b to the adsorption air blow-out port 69a. The adsorption rotor 61 is disposed in this passage to be hooked. When the adsorption fan 65 generates an airflow directed from the adsorption air intake port 69b to the adsorption air blow-out port 69a, moisture is adsorbed from the outdoor air passing through the adsorption rotor 61 to the adsorption rotor 61. The adsorption fan 65 is driven by a motor 65m.

The motor 61m of the adsorption rotor 61, the motor 63m of the switching damper 63, the motor 64m of the suction and exhaust fan 64, and the heater 62 are connected to the outdoor control board 82. The controller 8 can control the number of revolutions of the adsorption rotor 61, the switching of the switching damper 63, turning on and off of the suction and exhaust fan 64 and the adsorption fan 65, and the output of the heater 62 by the outdoor control board 82. FIGS. 3 and 5 show an outside air humidity sensor 71 among the sensors included in the indoor unit 2. The outside air humidity sensor 71 is connected to the outdoor control board 82. The controller 8 can detect relative humidity of the outdoor air by the outside air humidity sensor 71.

### (2-3) Motion of air conditioning system 1

### (2-3-1) Operation in normal mode

Operations of the air conditioning system 1 in the normal mode include, for example, a cooling operation, a heating operation, a dehumidifying operation, a humidifying operation, a blowing operation, a ventilation operation, and an air purifying operation. Here, the operation in the normal mode is an operation other than an operation in the cleaning mode. The operation in the normal mode is not limited to the cooling operation, the heating operation, and the like descrived above. Further, in the normal mode descrived above, a plurality of operations may be combined, such as a combination of the heating operation and the humidifying operation.

### (2-3-1-1) Cooling operation

Before a start of the cooling operation, the controller 8 is instructed to perform the cooling operation and is instructed as for a target temperature, for example, by the remotecontroller 15. During the cooling operation, the controller 8 switches the four-way valve 42 to a state shown by the solid line in FIG. 3. During the cooling operation, the four-way valve 42 causes the refrigerant to flow between the first port P1 and the second port P2, and the refrigerant to flow between the third port P3 and the fourth port P4. The four-way valve 42 during the cooling operation causes a high-temperature and high-pressure gas refrigerant discharged from the compressor 41 to flow to the outdoor heat exchanger 44. In the outdoor heat exchanger 44, heat is exchanged between the refrigerant and the outdoor air supplied by the outdoor fan 46. The refrigerant cooled by the outdoor heat exchanger 44 is decompressed by the outdoor expansion valve 45 and flows into the indoor heat exchanger 21. In the indoor heat exchanger 21, heat is exchanged between the refrigerant and the indoor air supplied by the indoor fan 22. The refrigerant heated by the heat exchange in the indoor heat exchanger 21 is sucked into the compressor 41 via the four-way valve 42 and the accumulator 43. The indoor air cooled by the indoor heat exchanger 21 is blown out from the indoor unit 2 to the room RM to cool the room. In the air conditioner 10, the indoor heat exchanger 21 functions as a refrigerant evaporator to heat the indoor air in the room RM, and the outdoor heat exchanger 44 functions as a refrigerant radiator in the cooling operation.

### (2-3-1-2) Heating operation

Before a start of the heating operation, the controller 8 is instructed to perform the heating operation and is instructed as for the target temperature, for example, by the remotecontroller 15. During the heating operation, the controller 8 switches the four-way valve 42 to a state shown by the broken line in FIG. 3. During the heating operation, the four-way valve 42 causes the refrigerant to flow between the first port P1 and the fourth port P4, and the refrigerant to flow between the second port P2 and the third port P3. The four-way valve 42 during the heating operation causes the high-temperature and high-pressure gas refrigerant discharged from the compressor 41 to flow to the indoor heat exchanger 21. In the indoor heat exchanger 21, heat is exchanged between the refrigerant and the indoor air supplied by the indoor fan 22. The refrigerant cooled by the indoor heat exchanger 21 is decompressed by the outdoor expansion valve 45 and flows into the outdoor heat exchanger 44. In the outdoor heat exchanger 44, heat is exchanged between the refrigerant and the indoor air supplied by the outdoor fan 46. The refrigerant heated by the heat exchange in the outdoor heat exchanger 44 is sucked into the compressor 41 via the four-way valve 42 and the accumulator 43. The indoor air heated by the indoor heat exchanger 21 is blown out from the indoor unit 2 to the room RM to heat the room. In the air conditioner 10, the indoor heat exchanger 21 functions as a refrigerant radiator to heat the indoor air in the room RM, and the outdoor heat exchanger 44 functions as a refrigerant evaporator in the heating operation.

### (2-3-1-3) Dehumidifying operation

Before a start of the dehumidifying operation, the controller 8 is instructed to perform the dehumidifying operation, for example, by the remotecontroller 15. Here, a case will be described where a plurality of modes can be selected in the dehumidifying operation. Information on which mode of a first dehumidifying mode, a second dehumidifying mode, or a third dehumidifying mode is selected is transmitted from the remotecontroller 15 to the controller 8. In the first dehumidifying mode, a first dehumidifying operation is performed to set substantially all of the indoor heat exchanger 21 as an evaporation region. In the second dehumidifying mode, a second dehumidifying operation is performed to set a part of the indoor heat exchanger 21 as an evaporation region and set the remaining part of the indoor heat exchanger 21 as a superheat region. In the third dehumidifying mode, a third dehumidifying operation is performed to set a part of the indoor heat exchanger 21 upstream of the electromagnetic valve 28 as a condensation region and set a part of the indoor heat exchanger 21 downstream of the electromagnetic valve 28 as an evaporation region.

During the dehumidifying operation, the controller 8 switches the four-way valve 42 to a state shown by the solid line in FIG. 3. During the dehumidifying operation, the four-way valve 42 causes the refrigerant to flow between the first port P1 and the second port P2, and the refrigerant to flow between the third port P3 and the fourth port P4. Therefore, in the refrigerant circuit 13, the direction in which the refrigerant flows is the same during the dehumidifying operation and during the cooling operation. The refrigeration cycle is also implemented in the refrigerant circuit 13 during the dehumidifying operation.

### (First dehumidifying operation)

In the first dehumidifying operation, when the refrigerant circulates in the refrigerant circuit 13, the controller 8 turns off the electromagnetic valve 28 and adjusts the operating frequency of the compressor 41 and an opening degree of the outdoor expansion valve 45. In the first dehumidifying operation, substantially all of indoor heat exchanger 21 is set as the evaporation region. As a result, the first dehumidifying operation has a high sensible heat capacity as an ability to change a room temperature.

Here, setting substantially all of the indoor heat exchanger 21 as an evaporation region refers to not only setting all of the indoor heat exchanger 21 as an evaporation region, but also setting only a part except for a part of the indoor heat exchanger 21 as an evaporation region. Only this part of (for example, one third or less of a total volume of the indoor heat exchanger 21) does not become an evaporation region, for example, when a part near a refrigerant outlet of the indoor heat exchanger 21 becomes a superheat region due to an indoor environment or the like.

### (Second dehumidifying operation)

In the second dehumidifying operation, when the refrigerant circulates in the refrigerant circuit 13, the controller 8 turns off the electromagnetic valve 28 and adjusts the operating frequency of the compressor 41 and an opening degree of the outdoor expansion valve 45. In the second dehumidifying operation, a part of the first heat exchange section 21F is set as an evaporation region, and the remaining part of the first heat exchange section 21F and the second heat exchange section 21R are set as a superheat region. The controller 8 controls the compressor 41 and the outdoor expansion valve 45 such that the evaporation region is equal to or less than a predetermined volume (for example, two thirds of the total volume of the indoor heat exchanger 21) during the second dehumidifying operation. An evaporation temperature of the second dehumidifying operation is set to be lower than an evaporation temperature of the first dehumidifying operation. In general, the opening degree of the outdoor expansion valve 45 at this time is smaller than the opening degree of the outdoor expansion valve 45 during the first dehumidifying operation. Since the sensible heat capacity of the second dehumidifying operation is lower than the first dehumidifying operation, it is possible to dehumidify the room while suppressing a decrease in room temperature when a heat load in the room is neither high nor low.

### (Third dehumidifying operation)

In the third dehumidifying operation, when the refrigerant circulates in the refrigerant circuit 13, the controller 8 turns on the electromagnetic valve 28 and adjusts the operating frequency of the compressor 41 and the opening degree of the outdoor expansion valve 45. In the third dehumidifying operation, by turning on the electromagnetic valve 28, the valve opening degree becomes smaller than in the first dehumidifying operation and the second dehumidifying operation. In the third dehumidifying operation, the first heat exchange section 21F is set as a condensation region, and the second heat exchange section 21R is set as an evaporation region. The controller 8 performs control such that an evaporation temperature of the third dehumidifying operation is lower than an evaporation temperature of the second dehumidifying operation. The opening degree of the outdoor expansion valve 45 at this time is fixed to be larger than a maximum opening degree of the outdoor expansion valve 45 during the second dehumidifying operation. Since the third dehumidifying operation has a lower sensible heat capacity than the second dehumidifying operation, it is possible to dehumidify the room while suppressing a decrease in room temperature when the heat load in the room is low.

### (Example of operating conditions for dehumidifying operation)

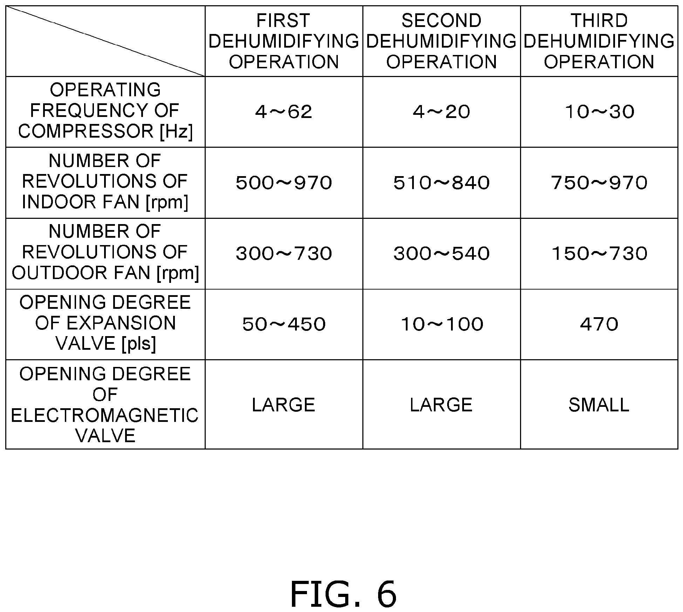

FIG. 6 shows examples of operating conditions of the first dehumidifying operation, the second dehumidifying operation, and the third dehumidifying operation. The controller 8 controls the outdoor fan 46 such that a control range of a number of revolutions of the outdoor fan 46 during the third dehumidifying operation is wider than a control range of the number of revolutions of the outdoor fan 46 during the second dehumidifying operation. An upper limit of the number of revolutions of the outdoor fan 46 during the third dehumidifying operation is higher than an upper limit of the number of revolutions of the outdoor fan 46 during the second dehumidifying operation. As a result, the evaporation temperature of the refrigerant during the third dehumidifying operation can be lower than the evaporation temperature of the refrigerant during the second dehumidifying operation. Therefore, when the room is dehumidified by the third dehumidifying operation, dehumidifying efficiency can be improved. The upper limit of the number of revolutions of the outdoor fan 46 during the second dehumidifying operation is set to, for example, 840 rpm. The upper limit of the number of revolutions of the outdoor fan 46 during the third dehumidifying operation is set to, for example, 970 rpm.

Further, a lower limit of the number of revolutions of the outdoor fan 46 during the third dehumidifying operation is lower than a lower limit of the number of revolutions of the outdoor fan 46 during the second dehumidifying operation. As a result, it is possible to suppress an excessive decrease in a pressure of the refrigerant between the outdoor heat exchanger 44 and the indoor heat exchanger 21 during the third dehumidifying operation. Therefore, when the room is dehumidified by the third dehumidifying operation, occurrence of choke phenomenon can be suppressed. The lower limit of the number of revolutions of the outdoor fan 46 during the second dehumidifying operation is set to, for example, 510 rpm. The lower limit of the number of revolutions of the outdoor fan 46 during the third dehumidifying operation is set to, for example, 150 rpm.

The opening degree of the outdoor expansion valve 45 is adjusted by a pulse signal. A number of pulses (pls) of this pulse signal is proportional to the opening degree of the outdoor expansion valve 45. As the number of pulses increases, the opening degree of the outdoor expansion valve 45 increases.

### (2-3-1-4) Humidifying operation

Before a start of the humidifying operation, the controller 8 is instructed to perform the humidifying operation and is instructed as for a target humidity, for example, by the remotecontroller 15. During the humidifying operation, the controller 8 stops the compressor 41 and stops the refrigeration cycle in the refrigerant circuit 13. However, in a humidifying heating operation, the refrigeration cycle in the refrigerant circuit 13 is also implemented at the same time as the humidifying operation.

Upon receipt of the instruction of the humidifying operation, the controller 8 first controls the humidifier 6 to perform a first drying motion for drying the suction and exhaust hose 68. In the first drying motion, the controller 8 stops the adsorption fan 65 and the adsorption rotor 61. In the first drying motion, the controller 8 causes the heater 62 to heat the air, switches the switching damper 63 to generate an airflow directed from the first gate 63a to the second gate 63b, and drives the suction and exhaust fan 64. The outdoor air taken in from the humidifying air intake port 69c is heated by the heater 62, and has an increased temperature and thus a decreased relative humidity. Since the adsorption rotor 61 is stopped, moisture is not supplied to the air passing through the adsorption rotor 61. The suction and exhaust fan 64 passes the dried air through the suction and exhaust hose 68 to dry the suction and exhaust hose 68. The controller 8 counts operation time with the timer 81a, for example, and ends the first drying motion when the operation time reaches a predetermined time.

A humidifying motion is started after the end of the first drying motion. When the first drying motion ends, the controller 8 controls the adsorption fan 65 to be driven and controls the adsorption rotor 61 to rotate. When the outdoor air passes through the adsorption rotor 61 by driving the adsorption fan 65, moisture is adsorbed to the adsorption rotor 61 from the outdoor air. A location where the moisture is adsorbed is moved to a location where the air heated by the heater 62 passes by the rotation of the adsorption rotor 61. As a result, the moisture is desorbed from the location where the moisture is adsorbed to the heated air. The air having a high humidity in this way is sent to the room RM by the suction and exhaust fan 64 through the suction and exhaust hose 68 and the indoor unit 2. The controller 8 drives the indoor fan 22 of the indoor unit 2 in order to blow out high-humidity air into the room RM

### (2-3-1-5) Blowing operation

Before a start of the blowing operation, the controller 8 is instructed to perform the blowing operation, for example, by the remotecontroller 15. During the blowing operation, the controller 8 stops the compressor 41 and stops the refrigeration cycle in the refrigerant circuit 13. In the blowing operation, the remotecontroller 15 may instruct as for a target air volume, or the indoor unit 2 may automatically select the target air volume. The controller 8 controls the motor 22m of the indoor fan 22 to reach the target air volume. For example, in the normal mode, the controller 8 is configured to be able to increase the number of revolutions in an order of LL tap having a smallest number of revolutions, L tap, M tap, and H tap.

### (2-3-1-6) Ventilation operation

Before a start of the ventilation operation, the controller 8 is instructed to perform the ventilation operation, for example, by the remotecontroller 15. During the ventilation operation, the controller 8 stops the compressor 41 and stops the refrigeration cycle in the refrigerant circuit 13. The humidifying operation is also stopped during the ventilation operation. In order to stop the humidifying operation, the rotations of the adsorption fan 65 and the adsorption rotor 61 are stopped. In the ventilation operation, the controller 8 controls the motor 64m to drive the suction and exhaust fan 64. Further, in the ventilation operation, the controller 8 switches between a supply state and an exhaust state by controlling the switching damper 63. In the supply state, the outdoor air is taken in from the humidifying air intake port 69c and blown out to the room RM through the suction and exhaust hose 68 and the indoor unit 2. In the exhaust state, the indoor air is exhausted from the room RM through the indoor unit 2 and the suction and exhaust hose 68 from the humidifying air intake port 69c.

### (2-3-1-7) Air purifying operation

The air conditioning system 1 according to the first embodiment performs the air purifying operation using the discharge unit 29. Here, the air purifying operation is an operation of suppressing harmful components and/or odor components in the air. The air purifying operation is, for example, an operation of suppressing harmful components and/or odor components by decomposing power of streamer discharge.

### (2-3-2) Operation in cleaning mode

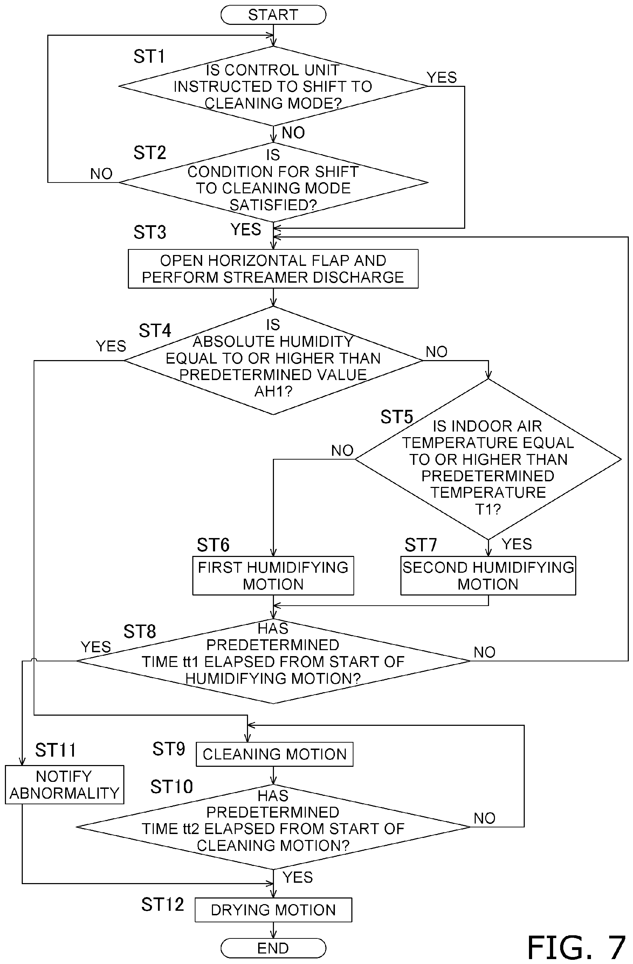

The operation in the cleaning mode will be described with reference to a flowchart in FIG. 7. The cleaning mode is started in a case where the controller 8 is instructed to start the operation in the cleaning mode (manual start) or in a case where the controller 8 automatically determines the start of the operation in the cleaning mode (automatic start). The air conditioning system 1 according to the first embodiment corresponds to both cases of the manual start and the automatic start. Alternatively, the air conditioning system 1 can be configured to correspond to either the manual start or the automatic start.

When the controller 8 is instructed to perform the cleaning mode (Yes in step ST1), the operation of the cleaning mode is started. In the manual start, for example, a cleaning mode start button for instructing for the cleaning mode of the remotecontroller 15 may be pressed. Without an instruction for the cleaning mode (No in step ST1), when the controller 8 determines that a condition for starting the operation in the cleaning mode is satisfied (Yes in step ST2), the operation in the cleaning mode is started. A condition for shift to the cleaning mode in step ST2 will be described later.

Upon start of the operation in the cleaning mode, the controller 8 controls the motor 27m to open the horizontal flap 27 and fix the horizontal flap 27 at a predetermined angle (step ST3). The angle of the horizontal flap 27 is preferably an angle at which the air blown from the indoor unit 2 does not directly hit any person in the room RM Further, upon start of the operation in the cleaning mode, the controller 8 controls the discharge unit 29 to start the streamer discharge (step ST3). In processing of step ST3, when the horizontal flap 27 is already open, the horizontal flap 27 is kept open. Further, in the process of step ST3, when the streamer discharge has already started, the streamer discharge is kept being performed. The streamer discharge ends with the end of the cleaning mode operation. When the streamer discharge is performed in the cleaning motion, the air conditioning system 1 can clean the indoor heat exchanger 21. However, the air conditioning system 1 can also be configured to stop the discharge of the discharge unit 29 and perform the cleaning motion.

Upon start of the operation in the cleaning mode, the controller 8 determines whether an absolute humidity of the air in the room RM has reached a predetermined humidity (step ST4). The controller 8 determines that the absolute humidity in the room has reached a predetermined value AH1 (predetermined humidity) not only when a value of the absolute humidity in the room is the predetermined value AH1 but also when the value of the absolute humidity in the room exceeds the predetermined value AH1.

For the determination in step ST4, the controller 8 detects a temperature in the room by the indoor air temperature sensor 31 and detects the relative humidity in the room by the indoor humidity sensor 32. The controller 8 calculates the absolute humidity of the air in the room RM from an air temperature value MT detected by the indoor air temperature sensor 31 and an air relative humidity value MRH detected by the indoor humidity sensor 32. Here, a case is described where the indoor humidity sensor 32 is a relative humidity sensor that detects relative humidity. Alternatively, an absolute humidity sensor that detects absolute humidity can be used as the indoor humidity sensor included in the indoor unit 2, and the controller 8 can be configured to compare a value detected by the absolute humidity sensor with the predetermined value AH1.

When the absolute humidity in the room does not reach the predetermined value AH1 (No in step ST4), the controller 8 controls the humidifier 6 to supply moisture to the room RM

In the air conditioning system 1 described herein, two methods are set for supplying moisture by the humidifier 6. The controller 8 selects an appropriate operation from a first humidifying motion and a second humidifying motion described below.

The first humidifying motion is an operation of humidifying at the same time as heating. In the first humidifying motion, the controller 8 controls the air conditioner 10 and the humidifier 6 such that the air conditioner 10 performs a heating motion for the room RM and the humidifier 6 performs a humidifying motion for the room RM at the same time.

The second humidifying motion is an operation of stopping the heating motion in the first humidifying motion and performing only the humidifying motion. In the first humidifying motion, the controller 8 controls the air conditioner 10 and the humidifier 6 to humidify the room RM by the humidifying motion of the humidifier 6. In the second humidifying motion, the heating motion is not performed, but since the indoor unit 2 sends high-humidity air to the room RM, the air conditioner 10 performs the air blowing motion.

The controller 8 selects the first humidifying motion or the second humidifying motion on the basis of the temperature in the room (step ST5). When the temperature detected by the indoor air temperature sensor 31 is equal to or higher than a predetermined temperature T1 (Yes in step ST5), the controller 8 selects the second humidifying motion. On the contrary, when the temperature detected by the indoor air temperature sensor 31 is less than the predetermined temperature T1 (No in step ST5), the controller 8 selects the first humidifying motion.

In both the first humidifying motion (step ST6) and the second humidifying motion (step ST7), the humidifying motion by the humidifier 6 is performed. The humidifying motion performed in the first humidifying motion and the second humidifying motion is the same as the humidifying motion performed by the humidifier 6 in the humidifying operation in the normal mode. However, in the humidifying motion performed in the first humidifying motion and the second humidifying motion, a humidifying capacity is set to be equal to or higher than a maximum value of a humidifying capacity that appears in the humidifying operation in the normal mode. In the cleaning mode, comfort of the room RM is not emphasized, but rather a quick termination of the operation in the cleaning mode is prioritized. Therefore, in the cleaning mode, the first humidifying motion or the second humidifying motion is performed at a value equal to or higher than the maximum value of the humidifying capacity that appears in the humidifying operation in the normal mode such that the absolute humidity in the room reaches the predetermined value AH1 quickly. For example, in a case where the L tap, M tap, and H tap are set in an order of the lowest humidifying capacity of the humidifying operation in the normal mode, H tap is selected in the first humidifying motion and the second humidifying motion.

In the first humidifying motion, the controller 8 controls the air conditioner 10 together with the humidifier 6 such that the heating motion is performed at the same time as the humidifying motion. The controller 8 controls the air conditioner 10 so as to reach a target temperature preset for the cleaning mode. Since the heating motion performed by the air conditioner 10 in the cleaning mode is the same as the motion of the air conditioner 10 in the heating operation in the normal mode, the description thereof is omitted here.

In both the first humidifying motion (step ST6) and the second humidifying motion (step ST7), the controller 8 determines whether a predetermined time tt1 has elapsed from a start of humidification (step ST8). When the predetermined time tt1 has not elapsed (No in step ST8), the processing returns to step ST3 and the first humidifying motion or the second humidifying motion is continued until the absolute humidity in the room reaches the predetermined value AH1.

When the predetermined time tt1 has elapsed (Yes in step ST8), an abnormality is notified (step ST11), a final drying motion is performed (step ST12), and the cleaning mode is terminated.

When the absolute humidity in the room has reached the predetermined value AH1 (Yes in step ST4), the cleaning motion is started (step ST9). In the cleaning motion, the humidifier 6 has stopped the humidifying motion. In the cleaning motion, the air conditioner 10 performs the same motion as the dehumidifying operation. In the air conditioning system 1 according to the first embodiment, the controller 8 controls the air conditioner 10 to perform the same motion as the first dehumidifying operation.

At the start of the cleaning motion, the controller 8 starts counting by the timer 81a. When a predetermined time tt2 elapses at the timer 81a (Yes in step ST10), the controller 8 ends the first dehumidifying motion and causes the final drying motion to be performed (step ST12).

The final drying motion in the cleaning mode is the same as the first drying motion of the humidifying operation in the normal mode. The controller 8 stops the adsorption fan 65 and the adsorption rotor 61 of the humidifier 6 in order to dry the suction and exhaust hose 68. Further, the controller 8 causes the heater 62 of the humidifier 6 to heat the air, switches the switching damper 63 to generate an airflow directed from the first gate 63a to the second gate 63b, and drives the suction and exhaust fan 64.

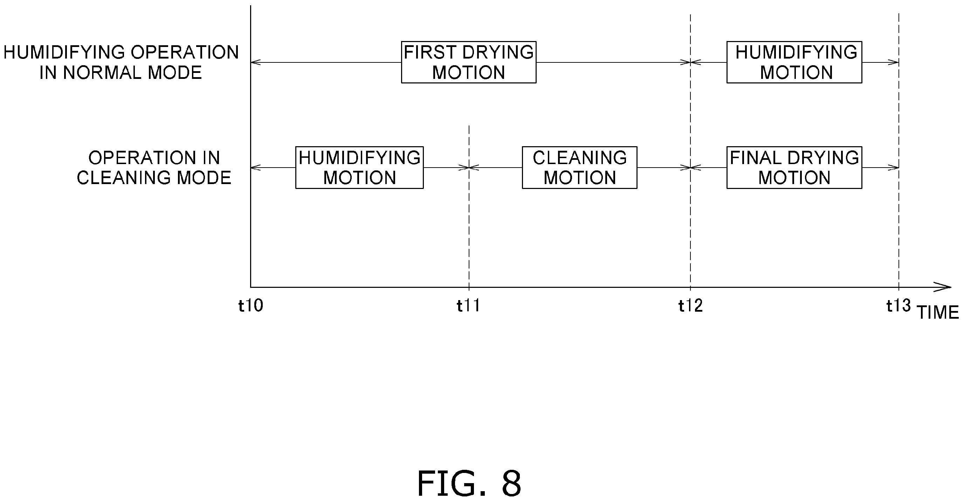

Here, as shown in FIG. 8, assuming that the operation starts at the same time at time t10, the operation in the cleaning mode and the humidifying operation in the normal mode are compared. In the operation in the cleaning mode, since there is no motion for drying the suction and exhaust hose 68 before the humidifying motion, the humidifying motion can be started immediately (at time t10). In the cleaning mode, the humidifying motion can be completed and shifted to the cleaning motion at time t11 when the first drying motion in the normal mode continues. In an example shown in FIG. 8, the cleaning motion in the cleaning mode has ended by time t12 when the first drying motion of the humidifying operation in the normal mode ends. In the example shown in FIG. 8, the final drying motion of the cleaning mode can be completed by time t13 when the humidifying motion in the normal mode ends.

### (2-3-3) Condition for shift to cleaning mode

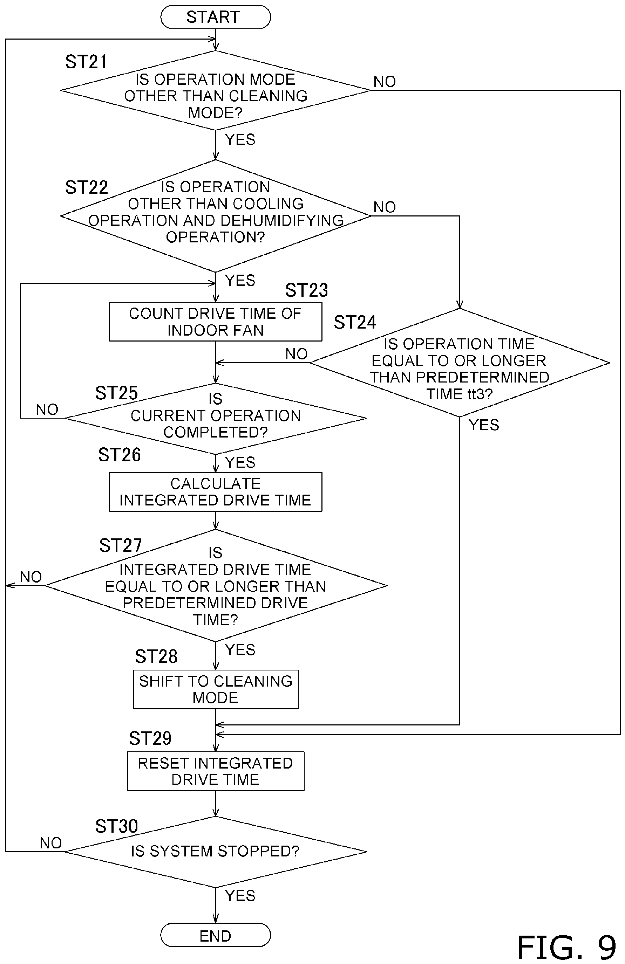

In the air conditioning system 1, the controller 8 automatically determines whether to shift to the cleaning mode in step ST2. The processing of the controller 8 for determining the condition for shift to the cleaning mode will be described with reference to FIG. 9.

The controller 8 determines an operating mode (step ST21). When the operating mode is the cleaning mode (Yes in step ST21), integrated drive time is reset (step ST29).

When the operating mode is other than the cleaning mode (No in step ST21), the controller 8 determines a type of operation (step ST22). The air conditioning system 1 according to the first embodiment has the normal mode as an operating mode other than the cleaning mode. Alternatively, the air conditioning system 1 may have an operating mode other than the normal mode and the cleaning mode. The air conditioning system 1 can select, as the operation in the normal mode, the cooling operation, the heating operation, the dehumidifying operation, the humidifying operation, the blowing operation, the ventilation operation, and the air purifying operation. Further, the air conditioning system 1 may have an operation other than the cooling operation, the heating operation, the dehumidifying operation, the humidifying operation, the blowing operation, the ventilation operation, and the air purifying operation as the operation in the normal mode, and may be configured not to include one or more of the above operations.

When the air conditioning system 1 is performing the heating operation, the humidifying operation, the blowing operation, the ventilation operation, or the air purifying operation (Yes in step ST22), the controller 8 counts drive time of the indoor fan 22 (step ST23). Performing the heating operation, the humidifying operation, the blowing operation, the ventilation operation, or the air purifying operation means, in other words, performing an operation other than the cooling operation and the dehumidifying operation. The drive time of the indoor fan 22 is counted by the control calculator 81b using, for example, the timer 81a of the indoor control board 81. The control calculator 81b stores the counted drive time in the storage 81c. The drive time of the indoor fan 22 is counted until a current operation is completed (Yes in step ST25). For example, even when the heating operation is performed, when the temperature of the room RM has reached the target temperature and the compressor 41, the indoor fan 22, and the like are stopped, the drive time of the indoor fan 22 is not counted.

The drive time of the indoor fan 22 is counted in a first drive time and a second drive time. The first drive time is the drive time of the indoor fan 22 during operation of the indoor unit 2 that heats the air with the indoor heat exchanger 21 in the normal mode. In other words, the first drive time is the drive time of the indoor fan 22 during the heating operation (including a heating humidifying operation) of the indoor unit 2. The second drive time is the drive time of the indoor fan 22 during operation of the indoor unit 2 that does not exchange heat with the indoor heat exchanger 21 in the normal mode. In other words, the second drive time is the drive time of the indoor fan 22 during the humidifying operation (except for the heating humidifying operation), the blowing operation, the ventilation operation, and the air purifying operation.

When the air conditioning system 1 is performing the cooling operation or the dehumidifying operation (No in step ST22), the controller 8 further determines whether the operation time of the cooling operation or the dehumidifying operation is a predetermined time tt3 or more (step ST24). The operation time of the cooling operation or the dehumidifying operation is counted by the control calculator 81b using, for example, the timer 81a of the indoor control board 81. The control calculator 81b stores the counted operation time in the storage 81c. When the operation time of the cooling operation or the dehumidifying operation is the predetermined time tt3 or more (Yes in step ST24), the controller 8 resets the integrated drive time of the indoor fan 22 (step ST29). In other words, the controller 8 resets the integrated drive time when the indoor unit 2 is operated to cause dew condensation on the indoor heat exchanger 21 in the normal mode.

When the operation time of the cooling operation and the dehumidifying operation is less than the predetermined time tt3 (No in step ST24), the controller 8 does not count the drive time of the indoor fan 22, and the processing proceeds to step ST25 of determining whether the current operation is completed. In other words, the controller 8 controls not to include, in the integrated drive time, the drive time of the indoor fan 22 when the indoor unit 2 is operating to cause dew condensation on the indoor heat exchanger 21 in the normal mode.

When the current operation is completed (Yes in step ST25), the controller 8 calculates the integrated drive time of the indoor fan 22 (step ST26). The controller 8 integrates the drive times stored in the storage 81c to calculate the integrated drive time. Here, the integrated drive time is calculated by summing the drive time of the indoor fan 22 in the heating operation, the humidifying operation, the blowing operation, the ventilation operation, and the air purifying operation. However, a method of calculating the integrated drive time is not limited to a method of simply summing the drive time of each operation. For example, the controller 8 can be configured to calculate the integrated drive time by weighting each type of operation.

The controller 8 determines whether the integrated drive time is equal to or longer than a predetermined drive time CT1 (step ST27). When the integrated drive time is equal to or longer than the predetermined drive time CT1 (Yes in step ST27), the controller 8 shifts to the cleaning mode (step ST27). The determination in step ST27 in FIG. 9 is an example of the determination in step ST2 in FIG. 7. Here, when the integrated drive time is equal to or longer than the predetermined drive time CT1, it is determined that the condition for the shift to the cleaning mode is satisfied. However, the condition for the shift to the cleaning mode does not have to be that the integrated drive time is equal to or longer than the predetermined drive time CT1. As a condition for the shift to the cleaning mode, for example, a condition that the operation in the normal mode is stopped may be added.

If the integrated drive time is less than the predetermined drive time CT1 (No in step ST27), the controller 8 causes the processing to return to the beginning (step ST21) and repeat the step for integrating the integrated drive time.

After the shift to the cleaning mode (step ST28), the integrated drive time is reset (step ST29), and when the air conditioning system 1 is not stopped (No in step ST30), the processing returns to the beginning (step ST21), and the step for integrating the integrate drive time is repeated. In the operation in the cleaning mode, step ST21, step ST29, and step ST30 are repeated, and thus the integrated drive time is not counted even when the indoor fan 22 is driven.

### <Second embodiment>

### (3) Overall configuration

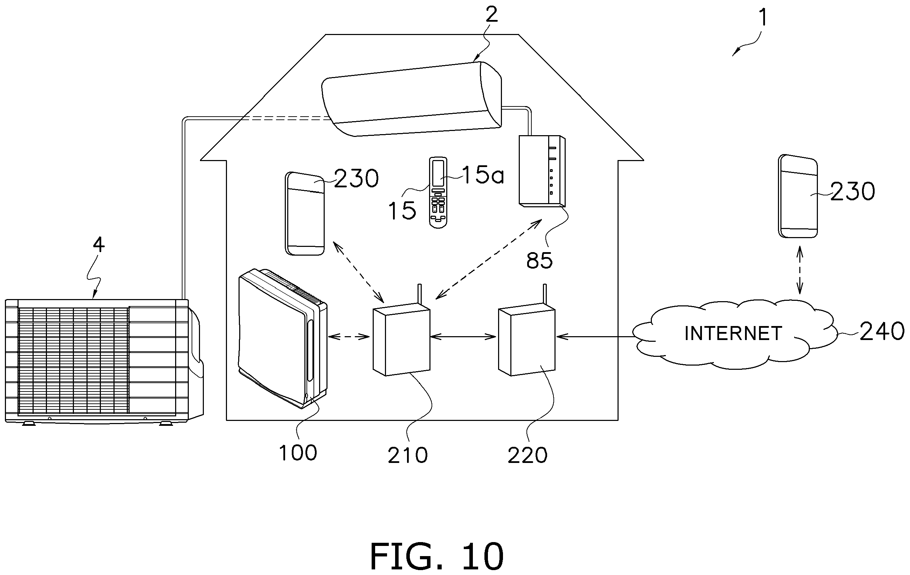

In the first embodiment, a case where the air conditioner 10 and the humidifier 6 are integrated has been described. Alternatively, the air conditioner 10 and the humidifier 6 may be separate bodies. In the air conditioning system 1 according to a second embodiment, as shown in FIG. 10, the air conditioner 10 and an air purifier 100 having a humidifying function are separate bodies. The air purifier 100 having a humidifying function corresponds to the humidifier 6 according to the first embodiment. The air purifier 100 is installed in the room RM and is configured to be unable to perform the ventilation operation.

As shown in FIG. 10, the indoor unit 2 of the air conditioner 10 and the air purifier 100 are connected to each other via a wireless LAN router 210. A wireless LAN adapter 85 is connected to the indoor control board 81 of the indoor unit 2. Here, a case where the wireless LAN adapter 85 is externally attached to the indoor unit 2 is shown. Alternatively, the wireless LAN adapter 85 may be built in the indoor unit 2. An air purifier control board 83 of the air purifier 100 has a built-in wireless LAN adapter function.

When the operation in the cleaning mode is performed, the air purifier 100 is instructed as for the motion by the indoor control board 81 via the wireless LAN router 210 and the wireless LAN adapter 85. The air conditioning system 1 including the air conditioner 10 and the air purifier 100 includes the controller 8. The controller 8 has the indoor control board 81, the outdoor control board 82, and the air purifier control board 83. Since the control of the indoor unit 2 by the indoor control board 81 and the control of the outdoor unit 4 by the outdoor control board 82 have been described in the first embodiment, the description thereof will be omitted here.

As shown in FIG. 10, the air conditioning system 1 according to the second embodiment can instruct the air conditioner 10 and the air purifier 100 by using a smartphone 230. For example, an instruction output from the smartphone 230 is transmitted to the air conditioner 10 and the air purifier 100 via the wireless LAN router 210 or via an internet 240, a broadband router 220, and the wireless LAN router 210.

### (4) Configuration of air purifier 100

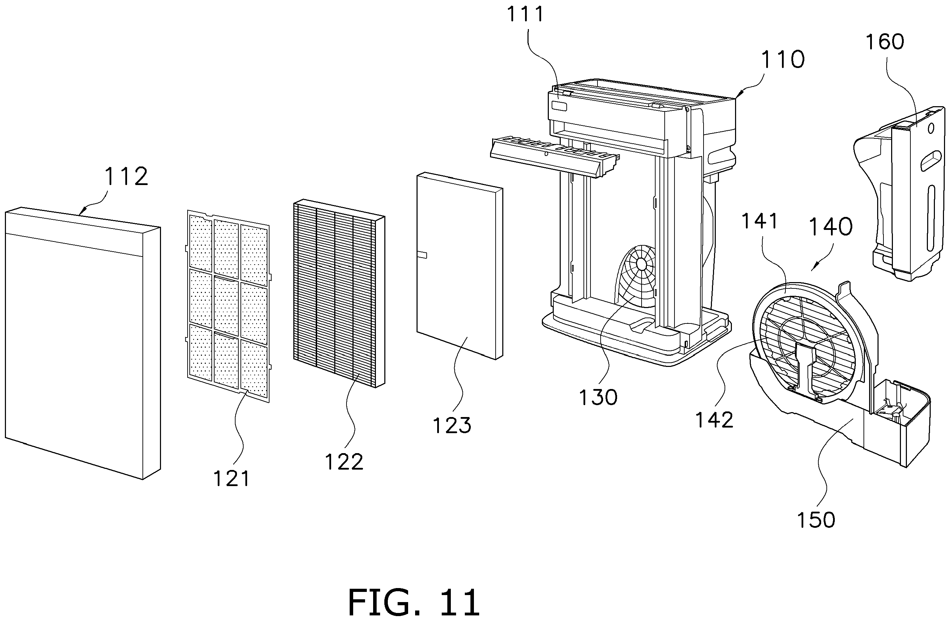

As shown in FIG. 11, the air purifier 100 includes a casing 110, a pre-filter 121, a dust collecting filter 122, a deodorizing filter 123, a fan 130, a humidifying filter unit 140, a water tray 150, and a water tank 160. The casing 110 includes a body 111 and a front panel 112.

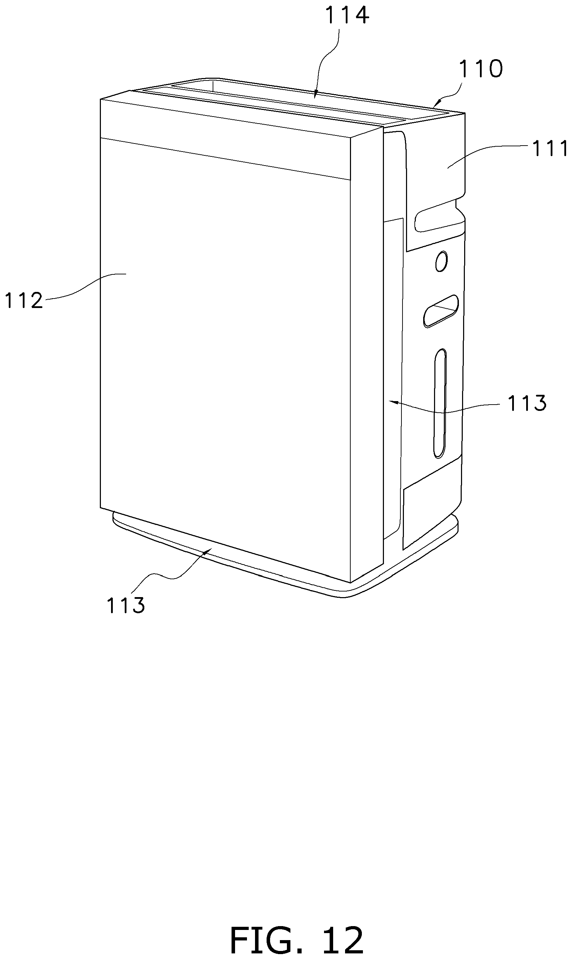

FIG. 12 shows the appearance of the air purifier 100. The air purifier 100 has suction ports 113 at a boundary between the front panel 112 and the body 111. Suction ports 113 are provided at a lower part and both sides of the front panel 112. A blow-out port 114 is provided at an upper part of the body 111. When the fan 130 is driven, the indoor air sucked from the suction ports 113 passes through the pre-filter 121, the dust collecting filter 122, the deodorizing filter 123, and the humidifying filter unit 140, and is blown out from the blow-out port 114.

The pre-filter 121 removes mainly large dust from the passing air. The dust collecting filter 122 removes mainly fine dust from the passing air. The deodorizing filter 123 includes, for example, activated carbon. The deodorizing filter 123 removes mainly odorous components from the passing air.

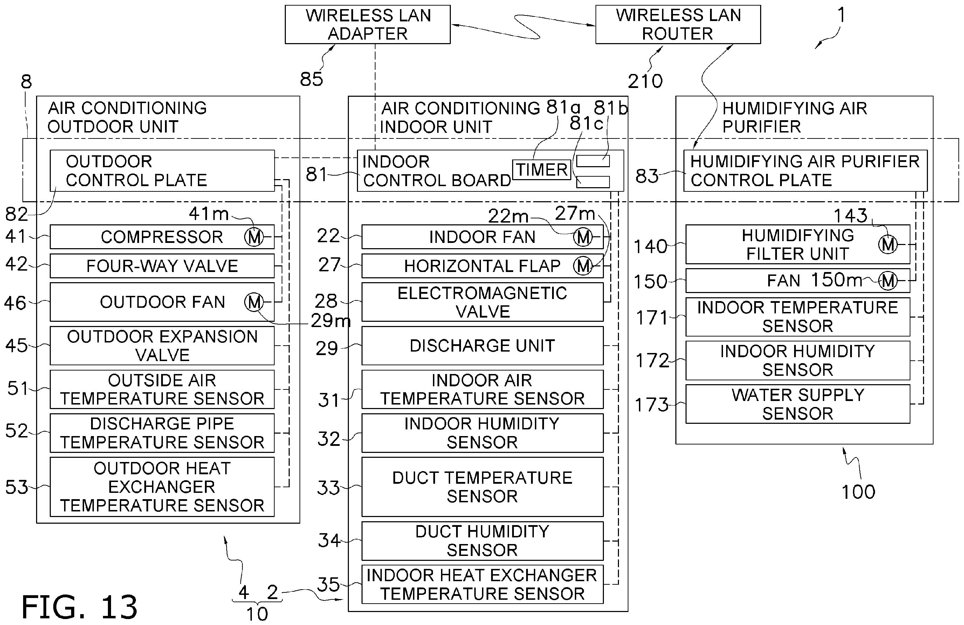

The humidifying filter unit 140 has a humidifying rotor 141 including a humidifying filter 142. The humidifying rotor 141 is rotated by a motor 143 shown in FIG. 13. The humidifying filter 142 receives supply of water stored in the water tray 150 by rotating together with the humidifying rotor 141. The humidifying filter 142, which has been supplied with water, supplies water to the passing air. When the motor 143 stops and the humidifying rotor 141 stops rotating, the humidifying filter unit 140 stops humidification. The water tray 150 replenishes the water to supply to the humidifying filter 142 by receiving supply of water from the water tank 160. A user replenishes the water tank 160 with water.

The controller 8 can control the motor 143 via the air purifier control board 83. Thus, the controller 8 can cause the air purifier 100 to perform the humidifying motion by turning on the motor 143, and can cause the air purifier 100 to stop the humidifying motion by turning off the motor 143.

As shown in FIG. 13, the air purifier 100 includes an indoor air temperature sensor 171, an indoor humidity sensor 172, and a water supply sensor 173. The indoor air temperature sensor 171 and the indoor humidity sensor 172 and the water supply sensor 173 are connected to the air purifier control board 83. Thus, the controller 8 can detect the temperature and the relative humidity of the indoor air by the indoor air temperature sensor 171 and the indoor humidity sensor 172 via the air purifier control board 83. The controller 8 according to the first embodiment uses the indoor air temperature sensor 31 and the indoor humidity sensor 32 for control. The controller 8 according to the second embodiment may use the indoor air temperature sensor 31 and the indoor humidity sensor 32, or may use the indoor air temperature sensor 31 and the indoor humidity sensor 32 for control. The controller 8 according to the second embodiment may use both sensors at the same time for control, for example, by using an average value of the indoor air temperature sensors 31 and 171 as the temperature of the indoor air. Further, the controller 8 according to the second embodiment may use both sensors at the same time for control, for example, by using an average value of the indoor humidity sensors 32 and 172 as the relative humidity of the indoor air.

### (5) Cleaning mode of air conditioning system 1 according to second embodiment

An operation in the cleaning mode of the air conditioning system 1 according to the second embodiment can be configured similarly to the operation in the cleaning mode of the air conditioning system 1 according to the first embodiment, except for differences described later. The air conditioning system 1 according to the second embodiment can operate in the cleaning mode by using the air purifier 100 as a humidifier. In this air conditioning system 1, the air purifier 100 sucks in the indoor air from the suction ports 113, moisturizes the indoor air, and blows the indoor air into the room RM from the blow-out port 114. Thus, the air conditioning system 1 according to the second embodiment performs the first humidifying motion by using the air conditioner 10 and the air purifier 100. In the first humidifying motion, the controller 8 causes the air conditioner 10 to perform the heating operation of the room RM, and at the same time causes the air purifier 100 to humidify the room RM In the second humidifying motion of the air conditioning system 1 according to the second embodiment, the controller 8 stops the operation of the air conditioner 10 and causes the air purifier 100 to perform humidification.

In the air conditioning system 1 according to the second embodiment, since the air purifier 100 is disposed in the room RM, it is not necessary to provide the suction and exhaust hose 68 passing through the wall WL. Therefore, the air conditioning system 1 according to the second embodiment can omit the step of drying the suction and exhaust hose 68 in the operation in the cleaning mode.

### (6) Modifications

### (6-1) Modifications 1A and 2A

In the first and second embodiments, the air conditioning system 1 in which the indoor heat exchanger 21 has no auxiliary heat exchange section has been exemplified. However, in the air conditioning system 1 according to the first embodiment and the second embodiment, a heat exchanger having an auxiliary heat exchange section can be used as the indoor heat exchanger 21. The auxiliary heat exchange section is attached to, for example, a front side of the first heat exchange section 21F at a position above a middle of the first heat exchange section 21F in an up-down direction.

In a case where the indoor heat exchanger 21 is provided with the auxiliary heat exchange section, the controller 8 turns off the electromagnetic valve 28 and adjusts the operating frequency of the compressor 41 and the opening degree of the outdoor expansion valve 45 in the second dehumidifying operation. The controller 8 sets the auxiliary heat exchange section as the evaporation region by the above adjustment. At this time, the first heat exchange section 21F and the second heat exchange section 21R are set as the superheat region.

### (6-2) Modifications 1B and 2B

In the first and second embodiments, a case has been described where the same refrigeration cycle as the first dehumidifying operation in the normal mode is implemented in the refrigerant circuit 13 as the cleaning motion in the cleaning mode. However, the cleaning motion that causes dew condensation on the surface of the indoor heat exchanger 21 as the cleaning motion in the cleaning mode is not limited to the implementation of the same refrigeration cycle as the first dehumidifying operation.

The cleaning motion may be, for example, an operation in which the first dehumidifying operation is performed at the start of the cleaning motion and the operation is changed to the second dehumidifying operation or the third dehumidifying operation in a midway of the cleaning motion. In such a case, the controller 8 performs control of setting substantially all of the first heat exchange section 21F and the second heat exchange section 21R as the evaporation region at the start of the cleaning motion, and changing the second heat exchange section 21R into the superheat region or the condensation region in a midway of the cleaning motion.

### (6-3) Modifications 1C and 2C

In the first and second embodiments, the final drying motion in the cleaning mode (step ST12) may include drying the indoor heat exchanger 21 by the heating operation of the air conditioner 10.

### (6-4) Modifications 1D and 2D

In the first and second embodiments, when the absolute humidity does not reach the predetermined value AH1 even after the predetermined time tt1 has elapsed, the controller 8 causes the humidifier 6 and the air purifier 100 to end the humidification and, at the same time, notifies that the cleaning motion cannot be performed (step ST11). However, the air conditioning system may be configured to perform processing different from the processing according to the first and second embodiments when the absolute humidity does not reach the predetermined value AH1.

In the processing in and after step ST10, for example, the control of the controller 8 of the air conditioning system 1 according to the first and second embodiments may be changed as follows. When the predetermined time tt1 has elapsed from the start of humidification by the first humidifying motion (step ST6) or the second humidifying motion (step ST7), the controller 8 starts the cleaning motion (step ST9). The control of the controller 8 after the start of the cleaning motion is performed as in the first and second embodiments.

### (6-5) Modification 1E

In the first embodiment, a case will be described where the first humidifying motion or the second humidifying motion is selectively executed as the humidifying motion in the cleaning mode. However, the humidifying motion in a humidifying mode is not limited to the first humidifying motion or the second humidifying motion. For example, the air conditioning system 1 may be configured to select a third humidifying operation as the humidifying motion in the cleaning mode as described below.

The third humidifying motion is an operation of supplying moisture to the room RM by supplying the outdoor air to the room RM When the amount of moisture included in the outdoor air is large, it may be possible to cause the absolute humidity of the room RM to reach the predetermined value AH1 by supplying the outdoor air to the room RM The controller 8 determines whether the absolute humidity of the room RM can reach the predetermined value AH1 by supplying the outdoor air to the room RM before step ST5 shown in FIG. 7. The controller 8 detects the temperature and the relative humidity of the outdoor air by the outside air temperature sensor 51 and the outside air humidity sensor 71. For example, when the temperature of the outdoor air is equal to or higher than a predetermined temperature T2 and the relative humidity of the outdoor air is equal to or higher than a predetermined humidity RH1, the controller 8 determines that the absolute humidity of the room RM can reach the predetermined value AH1. Upon determination that the predetermined value AH1 can be reached, the controller 8 drives the suction and exhaust fan 64 to perform an air-supplying operation for supplying the outdoor air to the room RM through the suction and exhaust hose 68.

### (6-6) Modifications 1F and 2F

In the first and second embodiments, time during which the indoor fan 22 is driven during the operation in the normal mode is counted as the drive time. However, a method of counting the drive time is not limited to such a method. For example, as a simple method of counting the drive time, the operation time in the normal mode may be counted. For example, when the operation time of a certain heating operation is tt4 and the drive time of the indoor fan 22 in the heating operation is tt5 (tt5 < tt4), the operation time tt4 of the heating operation may be used as the drive time of the indoor fan 22.

### (6-7) Modifications 1G and 2G

In the modifications 1F and 2F, a case has been described where the operation time of the operation in the normal mode is used as the drive time as a simple method of counting for the indoor fan 22. Alternatively, for example, when the indoor unit 2 has a cleaning mechanism for the air filter 24, a number of times of cleaning of the cleaning mechanism for the air filter 24 may be regarded as the drive time of the indoor fan 22. For example, one time of cleaning the cleaning mechanism is regarded as ten hours of the drive time of the indoor fan 22. For example, the controller 8 counts the number of times of cleaning of the cleaning mechanism in step ST23, and calculates a total number of times of cleaning of the cleaning mechanism in step ST26. In step ST27, the controller 8 determines to shift to the cleaning mode after the cleaning mechanism performs cleaning a predetermined number of times (for example, 20 times). Further, in step ST29, the controller 8 resets the number of times of cleaning of the cleaning mechanism.

### (6-8) Modification 1H

In the first embodiment, a case where the humidifier 6 is integrated with the outdoor unit 4 has been described. Alternatively, the humidifier 6 disposed outdoors does not have to be integrated with the outdoor unit 4, and may be separated from the outdoor unit 4. In a case where the humidifier 6 disposed outdoors and the outdoor unit 4 are separate bodies, for example, the outdoor unit 4 may be placed on a ground outdoors and the humidifier 6 may be attached to an outer wall.

### (6-9) Modification 1I

The first embodiment illustrates a case where the suction and exhaust hose 68 indirectly communicates with a space in the room RM via the indoor unit 2. However, the suction and exhaust hose 68 may be installed to directly communicate with the space in the room RM without going through the indoor unit 2.

### (6-10) Modification 1J

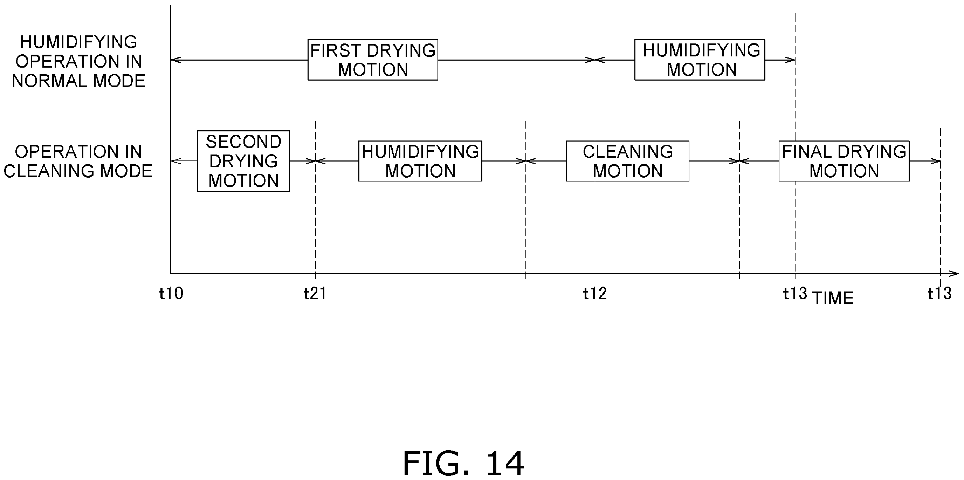

The first embodiment illustrates a case where the motion for drying is not performed before the humidifying motion of the operation in the cleaning mode. However, as shown in FIG. 14, the air conditioning system 1 may be configured to perform a second drying motion that is shorter than the first drying motion, prior to the humidifying motion of the operation in the cleaning mode. Time required for the first drying motion is shorter than time required for the second drying motion ((time t12 - time t10) > (time t21 - t10)). Therefore, in the cleaning mode, the controller 8 controls the humidifier 6 to dry the suction and exhaust hose 68 before starting to send the air moistened by the second drying motion having a shorter operation time than the first drying motion.

### (6-11) Modifications 1K and 2K

In the first and second embodiments, a case is described where the humidifier 6 or the air purifier 100 performs the humidifying motion in the cleaning mode. However, for example, the air conditioning system may include both the humidifier 6 and the air purifier 100, and such a humidifying system may perform the humidifying motion in the cleaning mode using a plurality of humidifiers (the humidifier 6 and the air purifier 100).

### (6-12) Modifications 1L and 2L

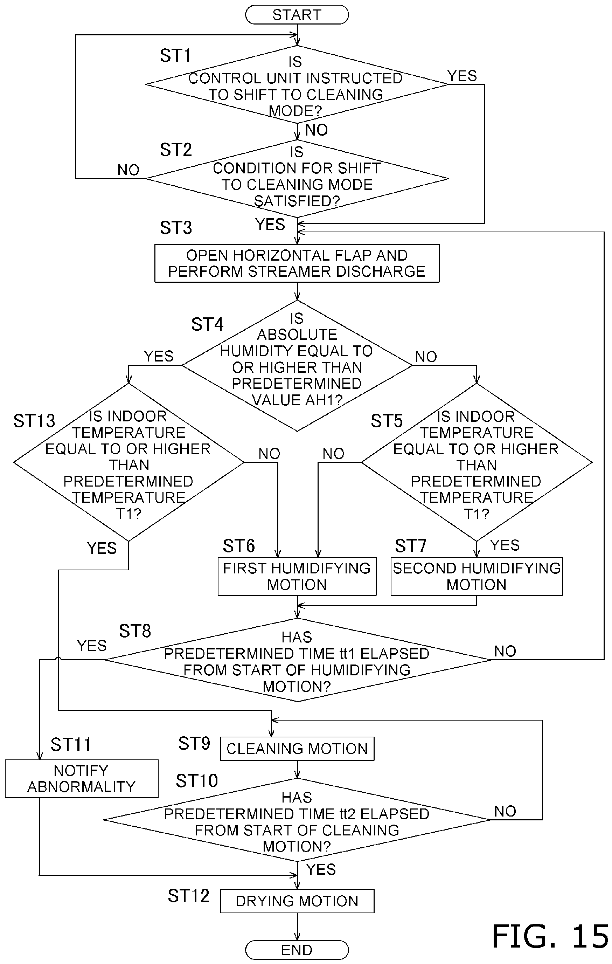

In the first and second embodiments, a case has been described where the cleaning motion (step ST9) is started without performing the humidifying motion, upon determination in step ST4 that the absolute humidity is equal to or higher than the predetermined value AH However, as shown in FIG. 15, it may be configured to determine whether the temperature in the room is equal to or higher than the predetermined temperature T1 after the absolute humidity is determined to be equal to or higher than the predetermined value AH Upon determination that the absolute humidity is equal to or higher than the predetermined value AH (Yes in step ST4), the controller 8 then determines whether the indoor air temperature is equal to or higher than the predetermined temperature T1 (step ST13). In other words, the controller 8 selects whether or not to perform the first humidifying motion on the basis of the temperature in the room. When the temperature detected by the indoor air temperature sensor 31 is equal to or higher than the predetermined temperature T1 (Yes in step ST13), the controller 8 starts the cleaning motion (step ST9). On the contrary, when the temperature detected by the indoor air temperature sensor 31 is less than the predetermined temperature T1 (No in step ST13), the controller 8 selects the first humidifying motion. When the temperature in the room is excessively low, a large amount of dew condensation water cannot be generated. However, by adding the determination in step ST13, it is possible to avoid a situation where the indoor air temperature is too low to generate a large amount of condensation water.

### (6-13) Modifications 1M and 2M

In the first and second embodiments, the humidifier 6 or the air purifier 100 stops the humidifying motion in the cleaning motion. However, the air conditioning system 1 can also be configured to continue the humidifying motion by the humidifier 6 or the air purifier 100 in the cleaning motion. The air conditioner 10 performs the same operation as, for example, the cooling operation while the air conditioning system 1 continues the humidifying motion by the humidifier 6 or the air purifier 100 in the cleaning motion,. In the cleaning motion, the indoor unit 2 continues to operate without stopping even when the temperature in the room is decreased.

Regarding the operation in the cleaning mode of humidifying in the cleaning motion, a more specific motion of the air conditioning system 1 will be described with reference to FIG. 7. Upon start of the operation in the cleaning mode, the controller 8 determines whether an absolute humidity of the air in the room RM has reached a predetermined humidity (step ST4). The controller 8 determines that the absolute humidity in the room has reached a predetermined value AH1 (predetermined humidity) not only when a value of the absolute humidity in the room is the predetermined value AH1 but also when the value of the absolute humidity in the room exceeds the predetermined value AH1. When the absolute humidity in the room does not reach the predetermined value AH1 (No in step ST4), the controller 8 controls the humidifier 6 or the air purifier 100 to supply moisture to the room RM The controller 8 selects the first humidifying motion or the second humidifying motion on the basis of the temperature in the room (step ST5). When the temperature detected by the indoor air temperature sensor 31 is equal to or higher than a predetermined temperature T1 (Yes in step ST5), the controller 8 selects the second humidifying motion. On the contrary, when the temperature detected by the indoor air temperature sensor 31 is less than the predetermined temperature T1 (No in step ST5), the controller 8 selects the first humidifying motion. In the first humidifying motion, the controller 8 controls the air conditioner 10 together with the humidifier 6 or the air purifier 100 such that the heating motion is performed at the same time as the humidifying motion. In both the first humidifying motion (step ST6) and the second humidifying motion (step ST7), the controller 8 determines whether a predetermined time tt1 has elapsed from a start of humidification (step ST8). When the predetermined time tt1 has not elapsed (No in step ST8), the processing returns to step ST3 and the first humidifying motion or the second humidifying motion is continued until the absolute humidity in the room reaches the predetermined value AH1.

When the predetermined time tt1 has elapsed (Yes in step ST8), an abnormality is notified (step ST11), a final drying motion is performed (step ST12), and the cleaning mode is terminated.

When the absolute humidity in the room has reached the predetermined value AH1 (Yes in step ST4), the cleaning motion is started (step ST9). When the cleaning motion is entered after the first humidifying motion or the second humidifying motion is performed, the controller 8 controls the humidifier 6 or the air purifier 100 to continue the humidifying motion. Further, the controller 8 controls the indoor unit 2 to cause the indoor heat exchanger 21 to function as an evaporator in the cleaning motion. For example, the controller 8 causes the indoor unit 2 to perform the cooling operation in order to cause the indoor heat exchanger 21 to function as an evaporator in the cleaning motion.

At the start of the cleaning motion, the controller 8 starts counting by the timer 81a. When a predetermined time tt2 elapses at the timer 81a (Yes in step ST10), the controller 8 ends a cleaning operation. Since the motion after the end of the cleaning motion has already been described, the description of the motion after the end of the cleaning motion will be omitted here.

The controller 8 causes the humidifier 6 or the air purifier 100 to continue the humidifying motion until the end of the cleaning motion and causes the indoor heat exchanger 21 to continue functioning as an evaporator. However, the air conditioning system 1 may be configured such that the controller 8 controls the humidifier 6 or the air purifier 100 to stop the humidifying motion in a midway of the cleaning motion.

### (6-14) Modifications 1N and 2N

In the first and second embodiments, as shown in FIG. 7, it is determined whether the absolute humidity is equal to or higher than the predetermined value AH1, and after the absolute humidity becomes equal to or higher than the predetermined value AH1 (Yes in step ST4), the cleaning motion is started (step ST9). However, the cleaning motion may be performed without a determination of whether the absolute humidity is equal to or higher than a predetermined value. For example, upon start of the operation in the cleaning mode, the controller 8 acquires the values of the temperature and the relative humidity in the room from the indoor air temperature sensor 31 and the indoor humidity sensor 32. The controller 8 stores, for example, a table showing a relationship between the room temperature, the relative humidity in the room, and humidification time until the cleaning motion. The air conditioning system 1 may be configured such that the cleaning motion is started after humidification performed for the humidification time determined by the controller 8 using the table. In this case, the controller 8 causes the humidifier 6 or the air purifier 100 to continue humidifying during the cleaning motion. Even when the absolute humidity is slightly lower than a target absolute humidity at the start of the cleaning motion, the air conditioning system 1 can perform sufficient cleaning because moisture is supplied by humidification by the humidifier 6 or the air purifier 100 during the cleaning motion. For example, when the room temperature is 24°C and the relative humidity in the room is 70%, humidification is not necessary. Therefore, the controller 8 performs control to refer to the table, set the humidification time to 0 minutes, and immediately start the cleaning motion (step ST9). For example, when the room temperature is 24°C and the relative humidity in the room is 30%, the controller 8 refers to data of the room temperature of 24°C and the relative humidity of 30% on the table. In this case, the controller 8 controls, for example, to start the cleaning motion after causing the humidifier 6 or the air purifier 100 to perform humidification for the humidification time set on the table without causing the heating operation to be performed. For example, when the room temperature is 10°C and the relative humidity in the room is 30%, the controller 8 refers to data of the room temperature of 10°C and the relative humidity of 30% on the table. In this case, the controller 8 controls, for example, to start the cleaning motion after causing the humidifier 6 or the air purifier 100 to perform humidification for the humidification time set on the table in addition to causing the heating operation to be performed.

### (7) Characteristics

(7-1)
As described in the first and second embodiments and the modifications 1M, 2M, IN, and 2N, in the air conditioning system 1, the controller 8 controls the humidifier 6 to increase the humidity in the room in the cleaning mode and then controls the indoor unit 2 to perform the cleaning motion of cleaning the surface of the indoor heat exchanger 21 by generating dew condensation water on the surface of the indoor heat exchanger 21. For example, before the cleaning mode, the inside of the room RM may be dried due to weather conditions or the like, and there may be insufficient amount of moisture in the air of the room RM to sufficiently clean the indoor heat exchanger 21. However, even in such a case, the insufficient moisture in the air of the room RM can be supplemented by the first humidifying motion and/or the second humidifying motion in the cleaning mode (steps ST6 and ST7). As a result, the air conditioning system 1 can raise the humidity in the room by humidifying in the cleaning mode and perform the cleaning motion with sufficient dew condensation water.

(7-2)
In the air conditioning system 1 described in the first and second embodiments and the modifications 1M and 2M, the controller 8 controls the humidifier 6 or the air purifier 100 having the humidifying function for the absolute humidity in the room to reach the predetermined value AH1 in the cleaning mode (steps ST6 and ST7). After the humidifying motion by the humidifier 6 or the air purifier 100 having the humidifying function, the controller 8 causes the indoor unit 2 to perform the cleaning motion of cleaning the surface of the indoor heat exchanger 21 by generating dew condensation on the surface of the indoor heat exchanger 21 (particularly surfaces of the heat transfer fins 21a). The air conditioning system 1 according to the first and second embodiments and the modifications 1M and 2M can raise the absolute humidity of the room RM to the predetermined value AH1 in the first humidifying motion and/or the second humidifying motion in the cleaning mode (in an example of setting the indoor humidity to a predetermined humidity) and perform the cleaning motion with sufficient dew condensation water.

(7-3)
In the air conditioning system 1 described in the modifications 1M and 2M, the controller 8 causes the indoor heat exchanger 21 to function as an evaporator and causes the humidifier 6 or the air purifier 100 to perform humidification in the cleaning motion. By performing such control by the controller 8, for example, even when the room temperature is decreased during the humidification before the cleaning motion and a dew point temperature is decreased, the humidification continues during the cleaning motion, and thus sufficient dew condensation water necessary for cleaning can be secured.

(7-4)
At the start of the cleaning mode, the controller 8 of the air conditioning system 1 according to the first and second embodiments determines whether the absolute humidity of the room RM is equal to or higher than the predetermined value AH1 (step ST4). When the absolute humidity of the room RM has already reached the predetermined value AH1, energy will be wasted by operating the humidifier 6 or the air purifier 100. In that case (Yes in step ST4), the humidifying motion in the cleaning mode is omitted and the cleaning motion is immediately started (step ST9). With such control, the air conditioning system 1 can suppress energy consumption and shorten the time required for operation in the cleaning mode.

(7-5)
The humidifier 6 according to the first embodiment is provided in the air conditioner 10. In the first embodiment, the humidifier 6 and the air conditioner 10 are integrated. By integrating the humidifier 6 and the air conditioner 10, the air conditioning system 1 can reduce an installation space of devices. Further, specifically, in the air conditioning system 1 according to the first embodiment, the outdoor unit 4 and the humidifier 6 are integrated. In this case, the humidifier 6 can be installed outdoors. In the air conditioning system 1 according to the first embodiment, this eliminates the need for providing a space for installing the humidifier 6 in the room RM and can prevent the room RM from being smaller by installing the humidifier 6.

(7-6)
In the air conditioning system 1 according to the second embodiment, the air purifier 100 as a humidifier and the air conditioner 10 are separate bodies. Compared with the air conditioning system 1 according to the first embodiment, in the air conditioning system 1 according to the second embodiment, it is easy to change the air purifier 100 to another model. When the humidifying capacity of the cleaning mode is insufficient, the air conditioning system 1 according to the second embodiment can easily increase the humidifying capacity of the cleaning mode by changing the air purifier 100 to a model having a high humidifying capacity. Further, maintenance for the air purifier 100 can be performed individually and thus is easier than maintenance for the humidifier 6 integrated with the outdoor unit 4, for example.

(7-7)
In the humidifier 6 and the air purifier 100 of the air conditioning system 1 according to the first and second embodiments, for example, the L tap, M tap, or H tap can be selected for the humidifying capacity in the normal mode (an example of an operating mode other than the cleaning mode). The L tap has the lowest humidifying capacity, the M tap has a higher humidifying capacity than the L tap, and the H tap has a higher humidifying capacity than the M tap. When humidifying in the cleaning mode, the controller 8 operates the humidifier 6 and the air purifier 100 with the humidifying capacity of the H tap that appears in the normal mode. In the air conditioning system 1 according to the first and second embodiments, the humidifying capacity in the cleaning mode is set to be equal to or higher than the maximum value of the humidifying capacity appearing in the normal mode as an operating mode other than the cleaning mode, and thus the time until the end of the cleaning mode can be reduced.

In the humidifier 6 and the air purifier 100, for example, HH tap having a higher humidifying capacity than the H tap may be set. The controller 8 may be configured to cause the humidifier 6 and the air purifier 100 to perform humidification in the cleaning mode with the HH tap and to perform the humidifying operation in the normal mode with a humidifying capacity of the H tap or less.

Further, the humidifier 6 and the air purifier 100 may be configured such that the humidifying capacity can be changed linearly instead of being switched stepwise. Assuming that the maximum value of the humidifying capacity that can be changed linearly in the normal mode is Mh, the controller 8 raises the humidifying capacity of the humidifier 6 and the air purifier 100 to a predetermined humidifying capacity of Mh or more during humidification in the cleaning mode.

(7-8)
In the air conditioning system 1 according to the modifications 1B and 2B, the controller 8 performs control of setting substantially all of the first heat exchange section 21F and the second heat exchange section 21R as the evaporation region at the start of the cleaning motion, and changing the second heat exchange section 21R into the superheat region or the condensation region in a midway of the cleaning mode. This air conditioning system 1 can suppress a decrease in the temperature of the air blown out from the indoor unit 2 by the second heat exchange section 21R changed to the superheat region or the condensation region, while generating dew condensation water on the first heat exchange section 21F in a midway of the cleaning mode. Therefore, the air conditioning system 1 according to the modifications 1B and 2B can easily suppress an excessive decrease in the indoor air temperature in the cleaning mode.

(7-9)
As shown in FIG. 7, the controller 8 according to the first and second embodiments determines whether the absolute humidity of the room RM has reached the predetermined value AH1 (step ST8) even when the predetermined time tt1 has elapsed from the start of humidification of the humidifier 6 and the air purifier 100 in the cleaning mode. When the absolute humidity does not reach the predetermined value AH1, the controller 8 causes the humidifier 6 and the air purifier 100 to end humidification and notifies that the cleaning motion cannot be performed (step ST11).

When the humidification is ended after the lapse of the predetermined time tt1, it is highly possible that the room has not been sufficiently humidified to be suitable for the cleaning motion. For example, it is conceivable that although the air conditioning system 1 is performing humidification, the absolute humidity may not rise because a window of the room RM is open and the indoor air is mixed with the outdoor air. In such a case, the air conditioning system 1 can notify a user that the cleaning motion cannot be performed and prompt the user to improve the situation to be suitable for the cleaning mode. In the above case, it is possible to notify the user promptly that the window is open. If the user closes the window and instructs the cleaning mode again, the operation of the cleaning mode can be appropriately performed.

(7-10)
The controller 8 configured as in the modifications 1E and 2E causes the humidifier 6 and the air purifier 100 to end humidification when the absolute humidity of the room RM does not reach the predetermined value AH1 even after the predetermined time tt1 has elapsed from the start of humidification of the humidifier 6 and the air purifier 100 in the cleaning mode. After the humidification is ended, the controller 8 causes the air conditioner 10 to start the cleaning motion. Although the humidity in the room rises to some extent after the lapse of the predetermined time tt1, the humidity may not reach the predetermined humidity in some cases. For example, a door that separates the room RM from another room may be open, and a space to be humidified may be larger. Continuing humidification in such a case increases an energy loss and extends the time until the end of the cleaning mode. In such a case, by starting the cleaning motion after a lapse of a predetermined time, the air conditioning system 1 can suppress wasteful energy consumption and extension of wasteful time for the cleaning mode.

The embodiments of the present disclosure have been described above. Various modifications to forms and details should be available without departing from the gist and the scope of the present disclosure recited in the claims.

### REFERENCE SIGNS LIST

1: Air conditioning system
2: Indoor unit
4: Outdoor unit
6: Humidifier
8: Controller
10: Air conditioner
21: Indoor heat exchanger
21F: First heat exchange section
21R: Second heat exchange section
22: Indoor fan
100: Air purifier (example of humidifier)

### CITATION LIST

### PATENT LITERATURE

Patent Literature 1: JP 2008-138913 A

## Claims

1. An air conditioning system (1) comprising:
an air conditioner (10) including an outdoor unit (4) and an indoor unit (2), the indoor unit that has an indoor heat exchanger (21), passes indoor air through the indoor heat exchanger, and exchanges heat of the indoor air;
a humidifier (6, 100) that supplies moisture to a room and raises a humidity in the room; and
a controller (8) that controls the indoor unit and the humidifier, wherein
in a cleaning mode, the controller controls the humidifier to raise the humidity in the room, and then controls the indoor unit to perform a cleaning motion of cleaning a surface of the indoor heat exchanger by generating dew condensation water on the surface of the indoor heat exchanger.

2. The air conditioning system (1) according to claim 1, wherein in the cleaning mode, the controller controls the humidifier for the humidity in the room to reach a predetermined humidity, and then controls the indoor unit to perform the cleaning motion of cleaning the surface of the indoor heat exchanger by generating dew condensation water on the surface of the indoor heat exchanger.

3. The air conditioning system (1) according to claim 2, wherein the controller causes the indoor heat exchanger to function as an evaporator and causes the humidifier to perform humidification in the cleaning motion.

4. The air conditioning system (1) according to claim 2, wherein when the humidity in the room is equal to or higher than the predetermined humidity at a start of the cleaning mode, the controller causes the air conditioner to start the cleaning motion without causing the humidifier to perform humidification in the cleaning mode.

5. The air conditioning system (1) according to any one of claims 1 to 4, wherein the humidifier is provided in the air conditioner.

6. The air conditioning system (1) according to any one of claims 1 to 4, wherein the air conditioner and the humidifier are separate bodies.

7. The air conditioning system (1) according to any one of claims 1 to 6, wherein in the cleaning mode, the controller sets a humidifying capacity of the humidifier to be equal to or higher than a maximum value of a humidifying capacity that appears in an operating mode other than the cleaning mode.

8. The air conditioning system (1) according to any one of claims 1 to 7, wherein
the indoor heat exchanger includes a first heat exchange section (21F) located upstream of a refrigerant flowing through the indoor heat exchanger and a second heat exchange section (21R) located downstream of the refrigerant flowing through the indoor heat exchanger when dew condensation water is generated on the indoor heat exchanger in the cleaning motion, and
the controller performs control of setting substantially all of the first heat exchange section and the second heat exchange section as an evaporation region at a start of the cleaning motion, and changing the second heat exchange section to a superheat region or a condensation region in a midway of the cleaning mode.

9. The air conditioning system (1) according to any one of claims 2 to 4, wherein when the humidity does not reach the predetermined humidity even after a predetermined time has elapsed from a start of humidification of the humidifier in the cleaning mode, the controller ends the humidification and notifies that the cleaning motion cannot be performed.

10. The air conditioning system (1) according to any one of claims 2 to 4, wherein in the cleaning mode, when the humidity does not reach the predetermined humidity even after a predetermined time has elapsed from a start of humidification of the humidifier, the controller ends the humidification and starts the cleaning motion.
